# EUROPEAN PATENT SPECIFICATION

(11) **EP 4 418 697 B1**
(45) Date of publication and mention of the grant of the patent: **18.03.2026**
(21) Application number: 22903000.2
(22) Date of filing: 11.10.2022
(51) Int. Cl.: H04W 4/06, H04W 48/08, H04W 76/10, H04W 76/11

(54) **MULTICAST/BROADCAST COMMUNICATION METHOD AND RELATED APPARATUS**
MULTICAST-/BROADCAST-KOMMUNIKATIONSVERFAHREN UND ZUGEHÖRIGE VORRICHTUNG
PROCÉDÉ DE COMMUNICATION DE DIFFUSION/MULTIDIFFUSION ET APPAREIL ASSOCIÉ

(30) Priority: 07.12.2021 CN 202111482564
(43) Date of publication of application: 21.08.2024
(73) Proprietor: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Pfenning, Meinig & Partner mbB
(86) International application number: PCT/CN2022/124505
(87) International publication number: WO 2023/103575

(56) References cited:
- WO-A1-2021/164564
- WO-A1-2021/204131
- CN-A- 113 630 822
- CN-A- 113 709 677
- US-A1- 2023 179 959
- NOKIA ET AL: "KI#1: Conclusion update related to ETSUN", vol. SA WG2, no. e-meeting; 20210224 - 20210303, 18 February 2021 (2021-02-18), XP052173508, Retrieved from the Internet <URL:https://ftp.3gpp.org/tsg_sa/WG2_Arch/TSGS2_143e_Electronic/Docs/S2-2101015.zip S2-2101015 PCR 23.757 KI1 conclusions ETSUN.docx> [retrieved on 20210218]
- SAMSUNG: "Update PDU Session Modification procedure regarding solution 4", 3GPP DRAFT; S2-1906524 WAS 1905672 UPDATE PDU SESSION MODIFICATION PROCEDURE REGARDING SOLUTION 4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, USA; 20190513 - 20190517, 17 May 2019 (2019-05-17), Mobile Competence Centre ; 650, route des Lucioles ; F-06921 Sophia-Antipolis Cedex ; France , XP051736336

## Description

### TECHNICAL FIELD

This application relates to the communication field, and more specifically, to a multicast/broadcast communication method and a related apparatus.

### BACKGROUND

Currently, to resolve a problem that a video service has increasingly strong impact on a mobile network, transmission of the video service may be optimized in an air interface multicast manner in a communication network architecture, to reduce impact of video traffic on the mobile network. Therefore, supporting a multicast broadcast service (multicast broadcast service, MBS) based on a current mobile communication network architecture (for example, a 5th generation (the 5th generation, 5G) mobile communication network architecture) is a means for effectively resolving the foregoing problem.

However, in some scenarios (for example, in a multi-SMF (that is, enhancing topology of session management function and user plane function (enhancing topology of session management function and user plane function, ETSUN)) scenario), it is possible to insert an intermediate session management function (intermediate session management function, I-SMF) into a control plane path of a protocol data unit (protocol data unit, PDU) session, and the I-SMF does not necessarily support a multicast broadcast service (support MBS).

However, due to existence of the I-SMF, an anchor SMF (anchor SMF, A-SMF) cannot directly exchange an N2 message at a terminal device granularity with a base station via an access and mobility management function (access and mobility management function, AMF). Therefore, if the intermediate SMF does not support the MBS, data of the MBS may be transmitted only in a unicast (individual delivery) manner regardless of whether the base station supports the MBS. This causes a waste of network resources, including low utilization of network resources on a radio access network side and a network side.

A method is known from CN 113709677 A that comprises the following steps: A network equipment determines information of a first SMF currently serving a MBS session corresponding to MBS information through an NRF according to the MBS information sent by UE, and the network equipment, according to the information of the first SMF, sends the MBS information to the first SMF, so that the first SMF adds the UE into the MBS session. Nokia et al: "KI#1: Conclusion update related to ETSUN", 3GPP Draft, S2-101015, 18 February 2021, discusses a conclusion update related to ETSUN.

### SUMMARY

This application provides a multicast/broadcast communication method and a related apparatus according to the independent claims, so that an intermediate session management function network element corresponding to a first PDU session of a terminal device can support a multicast broadcast service, in other words, an intermediate session management function network element supporting the multicast broadcast service is selected for the first PDU session of the terminal device. Therefore, a base station can transmit data to the terminal device in a multicast/broadcast manner (for example, by using a 5GC shared MBS traffic delivery method (5GC shared MBS traffic delivery method)), thereby saving network resources and improving network resource utilization. Particular embodiments are specified in the dependent claims.

According to a first aspect, a multicast/broadcast communication method is provided, and includes: A first session management function network element learns of multicast/broadcast capability information of an intermediate session management function network element corresponding to a first PDU session of a terminal device, where the first PDU session is used by the terminal device to join a first multicast broadcast service, and the first PDU session is associated with the first multicast broadcast service; and if the intermediate session management function network element does not support a multicast broadcast service, the first session management function network element sends first information to an access and mobility management function network element, where the first information is for triggering the access and mobility management function network element to select, for the first PDU session of the terminal device, at least one intermediate session management function network element that supports multicast broadcast.

The first session management function network element may be a session management function network element configured to control (control) an anchor (PDU session anchor, PSA) of the first PDU session, may be an anchor session management function network element (anchor SMF, A-SMF) of the first PDU session, or may be another type of session management function network element, for example, an intermediate session management function network element (I-SMF). This is not limited herein in this application.

In addition, the multicast/broadcast capability information of the intermediate session management function network element may indicate whether the intermediate session management function network element supports a multicast broadcast service.

Specifically, the multicast/broadcast capability information of the intermediate session management function network element indicates whether the intermediate session management function network element supports a multicast broadcast service. Supporting a multicast broadcast service means that the intermediate session management function network element has a software processing module and/or hardware related to the multicast broadcast service, for example, supporting processing of a multicast/broadcast-related parameter or function. Specifically, the processing may include: involving in (involved in), managing (management), or controlling (control) a multicast/broadcast session establishment procedure; involving in, managing, or controlling a multicast broadcast service joining or quitting procedure of the terminal device; involving in, managing, or controlling multicast/broadcast session update; involving in, managing, or controlling a handover procedure after joining a multicast/broadcast session; or involving in, managing, or controlling a multicast broadcast service release procedure. Further, the multicast broadcast service in this application may be replaced with a multicast/broadcast session. This is not limited herein in this application.

In addition, the first information may be independent information, or may be an information element in a piece of information. A form of the first information is not limited in this application.

In addition, the first PDU session may be used by the terminal device to join the first multicast broadcast service, the first PDU session is associated with the first multicast broadcast service, and the first multicast broadcast service is a service that the terminal device requests to join.

In an example, that the first PDU session is associated with the first multicast broadcast service may be understood as that a context of the first PDU session is associated with the first multicast broadcast service. Specifically, the terminal device may request to join the first multicast broadcast service by using a user plane message or a control plane message of the first PDU session.

Requesting to join the first multicast broadcast service by using the control plane message of the first PDU session may be as follows: The terminal device sends a PDU session modification request (PDU session modification request) or a PDU session establishment request (PDU session establishment request) that carries a join request (join request) or a join indication (join indication) and carries information about an identifier (for example, an MBS session ID, a TMGI, or an IP multicast address) of the first multicast broadcast service. Optionally, the first PDU session may be associated with the first multicast broadcast service in a manner of storing an identifier of the first multicast broadcast service in the context (associated PDU session context) corresponding to the first PDU session, and/or the first PDU session may be associated with the first multicast broadcast service in a manner of storing an identifier (UE ID, for example, an SUPI, a GPSI, a PEI, or an SUCI) of the terminal device in a context (MBS session context) corresponding to the first multicast broadcast service. For example, if the terminal device joins to watch CCTV-1 by using the control plane message of the first PDU session, the first PDU session is associated with one multicast broadcast service. If the terminal device further joins to watch CCTV-10, the first PDU session is associated with one other multicast broadcast service.

In another example, that the first PDU session is associated with the first multicast broadcast service may mean that the first PDU session is used for 5GC individual multicast broadcast service traffic delivery (5GC individual MBS traffic delivery) or 5G core individual multicast broadcast service traffic delivery (5G core individual MBS traffic delivery) of data of the first multicast broadcast service, and is, for example, used for an operation such as joining or quitting the first multicast broadcast service by the terminal device.

In another example, that the first PDU session is associated with the first multicast broadcast service may be understood as that the first PDU session is used for 5G core individual multicast broadcast service traffic delivery or 5GC individual multicast broadcast service traffic delivery, and the terminal device is enabled to involve in operation signaling of a session of the first multicast broadcast service. For example, the foregoing operation signaling may be joining or quitting the first multicast broadcast service.

It should be understood that, in this application, "supporting a multicast broadcast service (support MBS)" may be replaced with "supporting multicast/broadcast".

It should be further understood that in this application, "learning of (known)" may be replaced with "determining (determine)", "querying (inquery/query/discovery/search)", "detecting (detect)", or "obtaining (acquire or obtain)".

It should be further understood that, in embodiments of this application, "indicate" may be replaced with "represent".

Based on the foregoing solution, the first session management function network element may learn of the multicast/broadcast capability information of the intermediate session management function network element corresponding to the first PDU session of the terminal device. When the intermediate session management function network element does not support a multicast broadcast service, the first session management function network element sends, to the access and mobility management function network element, the first information for triggering selection, for the first PDU session of the terminal device, of at least one intermediate session management function network element that supports a multicast broadcast service. In this way, the access and mobility management function network element can effectively select, for the first PDU session, the intermediate session management function network element that supports an MBS. Further, a base station can transmit data to the terminal device in a multicast/broadcast manner, thereby saving network resources and improving network resource utilization.

With reference to the first aspect, in some implementations of the first aspect, that a first session management function network element learns of multicast/broadcast capability information of an intermediate session management function network element includes: The first session management function network element receives the multicast/broadcast capability information of the intermediate session management function network element from a core network element, where the core network element includes any one of a network repository function network element, an access and mobility management function network element, or the intermediate session management function network element.

Based on the foregoing solution, the first session management function network element may learn of, by using the core network element, the multicast/broadcast capability information of the intermediate session management function network element corresponding to the first PDU session of the terminal device, so that the first session management function network element can sense a multicast/broadcast capability of the intermediate session management function network element.

With reference to the first aspect, in some implementations of the first aspect, that the first session management function network element receives the multicast/broadcast capability information of the intermediate session management function network element from a core network element includes: The first session management function network element receives a first message from the core network element, where the first message includes the multicast/broadcast capability information of the intermediate session management function network element.

With reference to the first aspect, in some implementations of the first aspect, the first session management function network element sends a second message to the core network element, where the second message is for triggering the core network element to send the multicast/broadcast capability information of the intermediate session management function network element to the first session management function network element.

With reference to the first aspect, in some implementations of the first aspect, the second message includes second information, and the second information is for triggering the core network element to send the multicast/broadcast capability information of the intermediate session management function network element to the first session management function network element.

With reference to the first aspect, in some implementations of the first aspect, when the core network element includes the access and mobility management function network element, the first message includes at least one of the following information: a subscribed event (event), a notification correlation identifier (notifyCorrelationId), an event notification uniform resource identifier (eventNotifyUri), or a network function instance identifier (nfId).

For example, the network function instance identifier may be an identifier of the intermediate session management function network element.

With reference to the first aspect, in some implementations of the first aspect, when the core network element includes the network repository function network element, the first message includes at least one of the following information: a network function type (network function type, NFType), a network function instance identifier (network function instance ID, NfInstanceId), a network function or network function instance domain name (network function FQDN, Nf-fqdn), or an identifier of the intermediate session management function network element.

For example, the network function instance identifier may be the identifier of the intermediate session management function network element.

With reference to the first aspect, in some implementations of the first aspect, when the core network element includes the intermediate session management function network element, the first message includes information for querying the multicast/broadcast capability information of the intermediate session management function network element.

With reference to the first aspect, in some implementations of the first aspect, the first message is a response message of the second message.

The response message of the second message may be a reply message for a request message (that is, the first message), for example, a reply message for a PDU session update request message or a reply message for a network function query request message. Alternatively, the response message of the second message may be a notification message for a subscription message (that is, the first message), for example, a notification (Notify) message for an event subscription request message.

With reference to the first aspect, in some implementations of the first aspect, the second message may be any one of the following: a PDU session update request message (for example, Nsmf_PDUSession_Update Request), a PDU session context update request message (Nsmf_PDUSession_UpdateSMContext Request), a PDU session creation message (Nsmf_PDUSession_Create Request), a PDU session context creation message (Nsmf_PDUSession_CreateSMContext Request), an event subscription request message (for example, Namf_EventExposure Subscribe Request), or a network function query request message (for example, Nnrf_NFDiscovery_Request).

With reference to the first aspect, in some implementations of the first aspect, the first message is any one of the following: a PDU session update reply message (for example, Nsmf_PDUSession_Update Response), an event subscription notification message (for example, Namf_EventExposure Notify), or a network function query response message (for example, Nnrf_NFDiscovery_Response).

With reference to the first aspect, in some implementations of the first aspect, that a first session management function network element learns of multicast/broadcast capability information of an intermediate session management function network element includes: The first session management function network element sends a third message to the intermediate session management function network element, where the third message includes at least one of the following: identification information of the first multicast broadcast service, multicast/broadcast quality of service (quality of service, QoS) information of the first multicast broadcast service, or unicast QoS information corresponding to the multicast/broadcast QoS information of the first multicast broadcast service; the first session management function network element receives a fourth message from the intermediate session management function network element, where the fourth message includes a part or all of information in the third message; and the first session management function network element learns of the multicast/broadcast capability information of the intermediate session management function network element based on the fourth message.

The unicast QoS information corresponding to the multicast/broadcast QoS information of the first multicast broadcast service may be a unicast QoS flow that is for 5GC individual multicast broadcast service traffic delivery in the associated PDU session. The unicast QoS flow may be obtained through mapping (mapped) of a multicast/broadcast QoS flow in a multicast/broadcast session corresponding to the first multicast broadcast service.

Based on the foregoing solution, the first session management function network element may implicitly learn of the multicast/broadcast capability information of the intermediate session management function network element by sending and receiving information about the first multicast broadcast service.

With reference to the first aspect, in some implementations of the first aspect, the first information includes a first indication and/or a first cause, and the first indication and/or the first cause are/is for triggering the access and mobility management function network element to select, for the first PDU session of the terminal device, at least one intermediate session management function network element that supports a multicast broadcast service.

According to a second aspect, a multicast/broadcast communication method is provided, and includes: An access and mobility management function network element receives first information from a first session management function network element, where the first information is for triggering the access and mobility management function network element to select, for a first PDU session of a terminal device, at least one intermediate session management function network element that supports a multicast broadcast service, the first PDU session is used by the terminal device to join a first multicast broadcast service, and the first PDU session is associated with the first multicast broadcast service; and the access and mobility management function network element selects, for the first PDU session of the terminal device based on the first information, at least one intermediate session management function network element that supports a multicast broadcast service.

The first information may be carried in a PDU session context status notification (Nsmf_PDUSession_SMContextStatusNotify) or a PDU session status notification (Nsmf_PDUSession_StatusNotify); the first information may be carried in a new message; or the first information may be a new message. The first information is for triggering (trigger) selection of an intermediate session management function network element for the first PDU session. Specifically, the first information may be for triggering the access and mobility management function network element to select, for the first PDU session, at least one intermediate session management function network element that supports a multicast broadcast service.

Based on the foregoing solution, the access and mobility management function network element may select, for the first PDU session of the terminal device based on the first information, at least one intermediate session management function network element that supports a multicast broadcast service. In this way, the access and mobility management function network element can effectively select, for the first PDU session, the intermediate session management function network element that supports a multicast broadcast service. Further, a base station can transmit data to the terminal device in a multicast/broadcast manner, thereby saving network resources and improving network resource utilization.

With reference to the second aspect, in some implementations of the second aspect, the method further includes: The access and mobility management function network element sends a first message to the first session management function network element, where the first message includes multicast/broadcast capability information of the intermediate session management function network element.

Based on the foregoing solution, the first session management function network element can sense a multicast/broadcast capability of the intermediate session management function network element by receiving the first message.

With reference to the second aspect, in some implementations of the second aspect, the access and mobility management function network element receives a second message from the first session management function network element, where the second message is for triggering the access and mobility management function network element to send the multicast/broadcast capability information of the intermediate session management function network element to the first session management function network element.

With reference to the second aspect, in some implementations of the second aspect, the second message includes second information, and the second information is for triggering the access and mobility management function network element to send the multicast/broadcast capability information of the intermediate session management function network element to the first session management function network element.

With reference to the second aspect, in some implementations of the second aspect, the first message includes at least one of the following information: a subscribed event, a notification correlation identifier, an event notification uniform resource identifier, or a network function instance identifier.

For example, the network function instance identifier may be an identifier of the intermediate session management function network element.

With reference to the second aspect, in some implementations of the second aspect, the first message is a response message of the second message.

With reference to the second aspect, in some implementations of the second aspect, the second message is an event subscription request message.

With reference to the second aspect, in some implementations of the second aspect, the first message is an event subscription notification message.

With reference to the second aspect, in some implementations of the second aspect, the first information may include a first indication and/or a first cause, and the first indication and/or the first cause are/is for triggering the access and mobility management function network element to select, for the first PDU session of the terminal device, at least one intermediate session management function network element that supports a multicast broadcast service.

According to a third aspect, a multicast/broadcast communication method is provided, and includes: A first session management function network element learns of multicast/broadcast capability information of an intermediate session management function network element corresponding to a first PDU session of a terminal device, where the multicast/broadcast capability information of the intermediate session management function network element indicates whether the intermediate session management function network element supports a multicast broadcast service, the first PDU session is used by the terminal device to join a first multicast broadcast service, and the first PDU session is associated with the first multicast broadcast service; and if the intermediate session management function network element does not support a multicast broadcast service, the first session management function network element sends first information to the terminal device, where the first information indicates that the intermediate session management function network element does not support a multicast broadcast service.

For example, the first information may include an indication and/or a cause, to indicate that the intermediate session management function network element does not support a multicast broadcast service.

Based on the foregoing solution, the first session management function network element may learn of the multicast/broadcast capability information of the intermediate session management function network element corresponding to the first PDU session of the terminal device. When the intermediate session management function network element does not support a multicast broadcast service, the first session management function network element sends, to the terminal device, the first information indicating that the intermediate session management function network element does not support a multicast broadcast service. For example, the first information may include the indication and/or the cause, to indicate that the intermediate session management function network element does not support a multicast broadcast service. Therefore, the terminal device can trigger an access and mobility management function network element to select, for the first PDU session of the terminal device, at least one intermediate session management function network element that supports a multicast broadcast service. In this way, the access and mobility management function network element can effectively select, for the first PDU session, the intermediate session management function network element that supports an MBS. Further, a base station can transmit data to the terminal device in a multicast/broadcast manner, thereby saving network resources and improving network resource utilization.

It should be understood that the first information may be independent information, or may be an information element in a piece of information. A form of the first information is not limited in this application.

It should be further understood that, in embodiments of this application, "learning of (known)" may be replaced with "determining (determine)", "querying (inquery/query/discovery/search)", "detecting (detect)", or "obtaining (acquire or obtain)".

It should be further understood that, in embodiments of this application, "indicate" may be replaced with "represent".

With reference to the third aspect, in some implementations of the third aspect, that a first session management function network element learns of multicast/broadcast capability information of an intermediate session management function network element includes: The first session management function network element receives the multicast/broadcast capability information of the intermediate session management function network element from a core network element, where the core network element includes any one of a network repository function network element, the access and mobility management function network element, or the intermediate session management function network element.

Based on the foregoing solution, the first session management function network element may learn of, by using the core network element, the multicast/broadcast capability information of the intermediate session management function network element corresponding to the first PDU session of the terminal device, so that the first session management function network element can sense a multicast/broadcast capability of the intermediate session management function network element, that is, for example, whether to support a multicast broadcast service.

With reference to the third aspect, in some implementations of the third aspect, that the first session management function network element receives the multicast/broadcast capability information of the intermediate session management function network element from a core network element includes: The first session management function network element receives a first message from the core network element, where the first message includes the multicast/broadcast capability information of the intermediate session management function network element.

With reference to the third aspect, in some implementations of the third aspect, the first session management function network element sends a second message to the core network element, where the second message is for triggering the core network element to send the multicast/broadcast capability information of the intermediate session management function network element to the first session management function network element.

With reference to the third aspect, in some implementations of the third aspect, the second message includes second information, and the second information is for triggering the core network element to send the multicast/broadcast capability information of the intermediate session management function network element to the first session management function network element.

With reference to the third aspect, in some implementations of the third aspect, when the core network element includes the access and mobility management function network element, the first message includes at least one of the following information: a subscribed event, a notification correlation identifier, an event notification uniform resource identifier, or a network function instance identifier.

For example, the network function instance identifier may be the identifier of the intermediate session management function network element.

With reference to the third aspect, in some implementations of the third aspect, when the core network element includes the network repository function network element, the first message includes at least one of the following information: a network function type, a network function instance identifier, a network function domain name (Network Function FQDN, Nf-fqdn), or an identifier of the intermediate session management function network element.

With reference to the third aspect, in some implementations of the third aspect, when the core network element includes the intermediate session management function network element, the first message includes information for querying the multicast/broadcast capability information of the intermediate session management function network element.

With reference to the third aspect, in some implementations of the third aspect, the first message is a response message of the second message.

The response message of the second message may be a reply message for the first message.

With reference to the third aspect, in some implementations of the third aspect, the second message is any one of the following: a PDU session update request message, an event subscription request message, or a network function query request message.

With reference to the third aspect, in some implementations of the third aspect, the first message is any one of the following: a PDU session update reply message, an event subscription notification message, or a network function query response message.

With reference to the third aspect, in some implementations of the third aspect, the first information is carried in a PDU session establishment reject message (PDU Session Establishment Reject) or a PDU session modification reject message (PDU Session Modification Reject).

With reference to the third aspect, in some implementations of the third aspect, the first session management function network element sends a third message to the intermediate session management function network element, where the third message includes at least one of the following: identification information of the first multicast broadcast service, multicast/broadcast quality of service QoS information of the first multicast broadcast service, or unicast QoS information corresponding to the multicast/broadcast QoS information of the first multicast broadcast service; the first session management function network element receives a fourth message from the intermediate session management function network element, where the fourth message includes a part or all of information in the third message; and the first session management function network element learns of the multicast/broadcast capability information of the intermediate session management function network element based on the fourth message.

The unicast QoS information corresponding to the multicast/broadcast QoS information of the first multicast broadcast service may be a unicast QoS flow that is for 5GC individual multicast broadcast service traffic delivery in the associated PDU session. The unicast QoS flow may be obtained through mapping (mapped) of a multicast/broadcast QoS flow in a multicast/broadcast session corresponding to the first multicast broadcast service.

Based on the foregoing solution, the first session management function network element may implicitly learn of the multicast/broadcast capability information of the intermediate session management function network element by sending and receiving information about the first multicast broadcast service.

With reference to the third aspect, in some implementations of the third aspect, the first information includes first indication information and/or a first cause, and the first indication information and/or the first cause indicate/indicates that the intermediate session management function network element does not support a multicast broadcast service.

According to a fourth aspect, a multicast/broadcast communication method is provided, and includes: A terminal device receives first information from a first session management function network element, where the first information indicates that an intermediate session management function network element corresponding to a first PDU session of the terminal device does not support a multicast broadcast service, and the first PDU session is used by the terminal device to join a first multicast broadcast service; and the terminal device sends third information to an access and mobility management function network element based on the first information, where the third information is for triggering the access and mobility management function network element to select, for a PDU session associated with the first multicast broadcast service of the terminal device, at least one intermediate session management function network element that supports a multicast broadcast service.

Based on the foregoing solution, the terminal device receives, from the first session management function network element, the first information indicating that the intermediate session management function network element corresponding to the first PDU session of the terminal device does not support a multicast broadcast service, and sends, to the access and mobility management function network element based on the first information, the third information for triggering the access and mobility management function network element to select, for the PDU session associated with the first multicast broadcast service of the terminal device, at least one intermediate session management function network element that supports a multicast broadcast service. In this way, the access and mobility management function network element can effectively select, for the first PDU session, the intermediate session management function network element that supports a multicast broadcast service. Further, a base station can transmit data to the terminal device in a multicast/broadcast manner, thereby saving network resources and improving network resource utilization.

With reference to the fourth aspect, in some implementations of the fourth aspect, the third information includes a second indication and/or a second cause, and the second indication and/or the second cause indicate/indicates to select, for the PDU session associated with the first multicast broadcast service of the terminal device, at least one intermediate session management function network element that supports a multicast broadcast service.

With reference to the fourth aspect, in some implementations of the fourth aspect, the third information is carried in a first non-access stratum (non-access stratum, NAS) message, the first NAS message further includes a first join request, an identifier of the first PDU session, and an identifier of the first multicast broadcast service, the first PDU session belongs to the PDU session associated with the first multicast broadcast service of the terminal device, and the first join request is used by the terminal device to join the first multicast broadcast service.

With reference to the fourth aspect, in some implementations of the fourth aspect, the third information is carried in a second NAS message, the second NAS message further includes a second join request, an identifier of a second PDU session, and an identifier of the first multicast broadcast service, the second join request is used by the terminal device to join the first multicast broadcast service, and the second PDU session belongs to the PDU session associated with the first multicast broadcast service of the terminal device.

It should be understood that the second PDU session in the foregoing solution may also be the first PDU session. In other words, for example, the second PDU session may be a newly established PDU session, and a PDU session ID of the second PDU session may be the same as or different from that of the first PDU session. This is not limited herein in this application.

With reference to the fourth aspect, in some implementations of the fourth aspect, the first information is carried in a PDU session establishment reject message or a PDU session modification reject message.

With reference to the fourth aspect, in some implementations of the fourth aspect, the first information includes a first indication and/or a first cause, and the first indication and/or the first cause indicate/indicates that the intermediate session management function network element does not support a multicast broadcast service.

According to a fifth aspect, a multicast/broadcast communication method is provided, and includes: An access and mobility management function network element receives third information from a terminal device, where the third information is for triggering the access and mobility management function network element to select, for a PDU session associated with a first multicast broadcast service of the terminal device, at least one intermediate session management function network element that supports a multicast broadcast service; and the access and mobility management function network element selects, for the PDU session associated with the first multicast broadcast service of the terminal device based on the third information, at least one intermediate session management function network element that supports a multicast broadcast service.

Based on the foregoing solution, the access and mobility management function network element may select, based on the third information and for the PDU session associated with the first multicast broadcast service of the terminal device, the intermediate session management function network element that supports a multicast broadcast service. Further, a base station can transmit data to the terminal device in a multicast/broadcast manner, thereby saving network resources and improving network resource utilization.

With reference to the fifth aspect, in some implementations of the fifth aspect, the access and mobility management function network element sends a first message to a first session management function network element, where the first message includes multicast/broadcast capability information of an intermediate session management function network element corresponding to a first PDU session of the terminal device, and the first PDU session belongs to the PDU session associated with the first multicast broadcast service of the terminal device.

Based on the foregoing solution, the access and mobility management function network element may send, to the first session management function network element by using the first message, the multicast/broadcast capability information of the intermediate session management function network element corresponding to the first PDU session of the terminal device, so that the first session management function network element can sense a multicast/broadcast capability of the intermediate session management function network element.

With reference to the fifth aspect, in some implementations of the fifth aspect, the access and mobility management function network element receives a second message from the first session management function network element, where the second message is for triggering the access and mobility management function network element to send the multicast/broadcast capability information of the intermediate session management function network element to the first session management function network element.

With reference to the fifth aspect, in some implementations of the fifth aspect, the second message includes second information, and the second information is for triggering the access and mobility management function network element to send the multicast/broadcast capability information of the intermediate session management function network element to the first session management function network element.

With reference to the fifth aspect, in some implementations of the fifth aspect, the second message includes at least one of the following information: a subscribed event, a notification correlation identifier, an event notification uniform resource identifier, or a network function instance identifier.

For example, the network function instance identifier may be the identifier of the intermediate session management function network element.

With reference to the fifth aspect, in some implementations of the fifth aspect, the second message is an event subscription request message.

With reference to the fifth aspect, in some implementations of the fifth aspect, the first message is an event subscription notification message.

With reference to the fifth aspect, in some implementations of the fifth aspect, the first message is a response message of the second message.

With reference to the fifth aspect, in some implementations of the fifth aspect, the third information includes second indication information and/or a second cause, and the second indication information and/or the second cause indicate/indicates to select, for the PDU session associated with the first multicast broadcast service, at least one intermediate session management function network element that supports a multicast broadcast service.

With reference to the fifth aspect, in some implementations of the fifth aspect, the third information is carried in a first NAS message, the first NAS message further includes a first join request, an identifier of the first PDU session, and an identifier of the first multicast broadcast service, the first join request is used by the terminal device to join the first multicast broadcast service, and the first PDU session may be a PDU session for which the terminal device initiates modification. To be specific, for example, a type corresponding to an N1 SM container in a NAS message may be a PDU session modification request (PDU session modification request).

With reference to the fifth aspect, in some implementations of the fifth aspect, the third information is carried in a second NAS message, the second NAS message further includes a second join request, an identifier of a second PDU session, and an identifier of the first multicast broadcast service, the second join request is used by the terminal device to join the first multicast broadcast service, and the second PDU session belongs to the PDU session associated with the first multicast broadcast service of the terminal device.

The second PDU session may be a newly established PDU session initiated by the terminal device. For example, a type corresponding to an N1 SM container in a NAS message may be a PDU session establishment request (PDU session establishment request).

According to a sixth aspect, a communication apparatus is provided. The apparatus is configured to perform the method provided in the first aspect, the second aspect, the third aspect, the fourth aspect, or the fifth aspect. Specifically, the apparatus may include units and/or modules, such as a processing unit and/or a communication unit, configured to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

In an implementation, the apparatus is a first session management function network element. When the apparatus is the first session management function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first session management function network element. When the apparatus is the chip, the chip system, or the circuit used in the first session management function network element, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is a core network element. When the apparatus is a core network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a core network element. When the apparatus is the chip, the chip system, or the circuit used in the core network element, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is an access and mobility management function network element. When the apparatus is the access and mobility management function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in an access and mobility management function network element. When the apparatus is the chip, the chip system, or the circuit used in the access and mobility management function network element, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes: a memory, configured to store a program; at least one processor, configured to execute the computer program or instructions stored in the memory, to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

In an implementation, the apparatus is a first session management function network element.

In another implementation, the apparatus is a chip, a chip system, or a circuit used in a first session management function network element.

In an implementation, the apparatus is a terminal device.

In another implementation, the apparatus is a chip, a chip system, or a circuit used in a terminal device.

In an implementation, the apparatus is a core network element.

In another implementation, the apparatus is a chip, a chip system, or a circuit used in a core network element.

In an implementation, the apparatus is an access and mobility management function network element.

In another implementation, the apparatus is a chip, a chip system, or a circuit used in an access and mobility management function network element.

According to an eighth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code executed by a device, and the program code includes instructions for performing the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to a tenth aspect, a computer program product including instructions is provided. When the computer program product runs on a computer, the computer is enabled to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to an eleventh aspect, a chip is provided. The chip includes a processor and a communication interface. The processor reads, through the communication interface, instructions stored in a memory, to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

Optionally, in an implementation, the chip further includes the memory, the memory stores a computer program or the instructions, and the processor is configured to execute the computer program or the instructions stored in the memory. When the computer program or the instructions are executed, the processor is configured to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to a twelfth aspect, a multicast/broadcast communication system is provided, and includes the foregoing first session management function network element and the foregoing access and mobility management function network element.

According to a thirteenth aspect, a multicast/broadcast communication system is provided, and includes the foregoing first session management function network element, the foregoing terminal device, and the foregoing access and mobility management function network element.

### BRIEF DESCRIPTION OF DRAWINGS

FIG. 1 is a schematic diagram of a network architecture;
FIG. 2 is a schematic diagram of a network architecture that supports a multicast broadcast service;
FIG. 3 is a schematic diagram of a multicast/broadcast function;
FIG. 4 is a schematic diagram of a multicast/broadcast communication method 400 according to an embodiment of this application;
FIG. 5 is a schematic diagram of a multicast/broadcast communication method 500 according to an embodiment of this application;
FIG. 6A and FIG. 6B are a schematic diagram of a multicast/broadcast communication method 600 according to an embodiment of this application;
FIG. 7 is a schematic block diagram of a multicast/broadcast communication apparatus 700 according to an embodiment of this application;
FIG. 8 is a schematic block diagram of another multicast/broadcast communication apparatus 800 according to an embodiment of this application; and
FIG. 9 is a schematic diagram of a chip system 900 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

First, a network architecture applicable to this application is briefly described below.

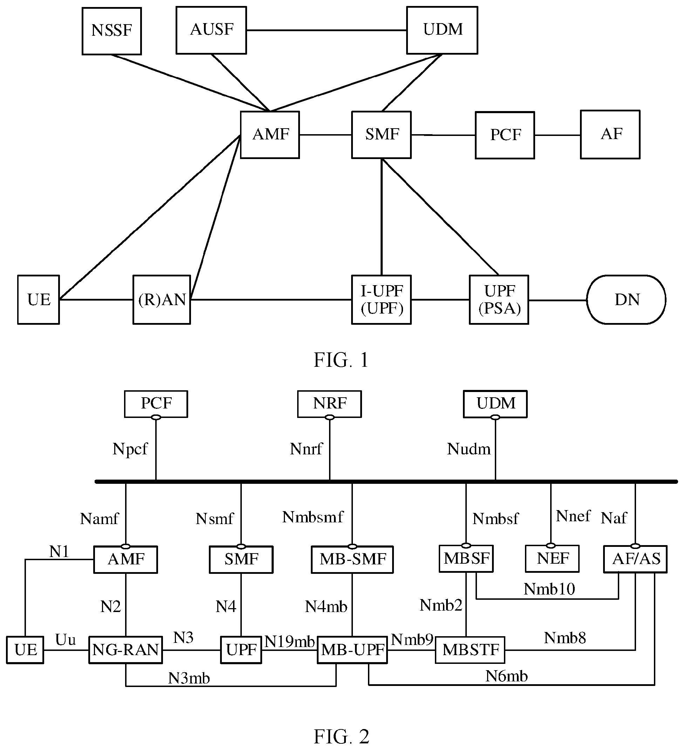

For example, FIG. 1 is a schematic diagram of a network architecture.

As shown in FIG. 1, a 5G system (the 5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), an intermediate user plane function, and a data network (data network, DN).

The DN may be the Internet. The NSSF, the AUSF, the UDM, the PCF, the AF, the AMF, the SMF, the I-UPF and the UPF are network elements in a core network. Because the 5G system is used as an example in FIG. 1, the core network may be referred to as a 5G core network (5G core network, 5GC, or 5GCN).

The following briefly describes network elements shown in FIG. 1.
1. The UE may be referred to as user equipment (user equipment), a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

It should be noted that a terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete device.

2. The (radio) access network ((radio) access network, (R)AN) device may provide a function of accessing a communication network for the terminal device. Specifically, the (R)AN device may include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may enable interconnection and interworking between the terminal device and a 3GPP core network by using a non-3GPP technology.

The AN device can be further responsible for functions such as radio resource management, quality of service (quality of service, QoS) management, and data compression and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), a transmission and reception point (transmission and reception point, TRP), or the like; may be a gNB or a transmission point (TRP or TP) in a 5G (for example, NR) system, or one antenna panel or a group of antenna panels (including a plurality of antenna panels) of a base station in the 5G system; or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. The AMF is mainly for functions such as access control, mobility management, and attachment and detachment.

4. The SMF is mainly for user plane network element selection, user plane network element redirection, internet protocol (internet protocol, IP) address assignment for the terminal device, session establishment, modification, and release, and QoS control. For example, a type of the SMF may be an A-SMF, an I-SMF, or the like.

5. The UPF is mainly for receiving and forwarding of user plane data. For example, the UPF may receive user plane data from the DN, and send the user plane data to the terminal device through the AN device. The UPF may further receive user plane data from the terminal device through the AN device, and forward the user plane data to the DN.

6. The PCF is mainly configured to guide a unified policy framework for network behavior, and provide policy rule information and the like for a control plane network element (for example, the AMF or the SMF).

7. The AF is mainly configured to provide a service for a 3GPP network, for example, interact with the PCF to perform policy control.

8. The Network slice selection function (network slice selection function, NSSF) is mainly for network slice selection.

9. The UDM is mainly for subscription data management of the UE, including storage and management of a UE identifier, access authorization of the UE, and the like.

10. The DN is mainly for an operator network that provides a data service for UE, for example, the internet (Internet), a third-party service network, and an IP multimedia service (IP multi-media service, IMS) network,

11. The AUSF is mainly for user authentication.

In the network architecture shown in FIG. 1, the network elements may communicate with each other through interfaces. For example, the UE is connected to the AN device by using the radio resource control (radio resource control, RRC) protocol, and the UE communicates with the AN device through a Uu interface.

As an example, FIG. 2 is a schematic diagram of a network architecture that supports a multicast broadcast service.

As shown in FIG. 2, the network architecture is extended based on the network architecture shown in FIG. 1. For example, two function instances, a multicast/broadcast session management function (Multicast/Broadcast Session Management Function, MB-SMF) network element and a multicast/broadcast user plane function (Multicast/Broadcast User Plane Function, MB-UPF) network element, are added to support a service or a function of a multicast broadcast service. Details are as follows.
1. The MB-SMF network element may implement a control plane function of a multicast broadcast service, and is responsible for management of the multicast broadcast service/group/session. For a control plane, the MB-SMF network element may be connected to a network exposure function (network exposure function, NEF) network element and/or a multicast/broadcast service function (Multicast/Broadcast Service Function, MBSF) network element, for example, may be configured to receive related information (for example, description information of the multicast broadcast service) of the multicast broadcast service. In addition, the MB-SMF network element may be further connected to the PCF network element, for example, may extract a policy and charging control (policy and charging control, PCC) rule related to the multicast broadcast service. For a user plane, the MB-UPF network element may be connected to a multicast/broadcast service transport function (Multicast/Broadcast Service Transport Function, MBSTF) network element or an AF network element (or may be an application server (application server, AS)), and is configured to receive service data of the multicast broadcast service. The MB-SMF network element and the SMF network element may be integrated into one network element, or may be independently deployed as two network elements, and the MB-UPF network element and the UPF network element may be integrated into one network element, or may be independently deployed as two network elements. This is not limited herein in this application.
2. The NEF provides frameworks, authentication, and interfaces related to network capability exposure, and transmits information between a 5G system network function and another network function.
3. A network repository function (network repository function, NRF) is for network function (network function, NF) registration, management, and status detection, to implement automatic management of all NFs. When each NF is started, the NF needs to be registered with the NRF to provide a service. Registration information includes an NF type, address, and service list.

It should be noted that, based on the schematic diagrams of the network architectures shown in FIG. 1 and FIG. 2, the following points should be further understood.
1. A name of the MB-SMF network element or the MB-UPF network element in the network architecture shown in FIG. 2 is merely an example. In the 5G network, the MB-SMF network element or the MB-UPF network element may have another name. This is not limited herein in this application.
2. The network architectures shown in FIG. 1 and FIG. 2 may further include another network element, for example, a network element or a device such as an NSSF or a unified data repository (unified data repository, UDR). This is not specifically limited in this application.
3. The network architectures shown in FIG. 1 and FIG. 2 are merely examples for description, and a network architecture applicable to embodiments of this application is not limited thereto. Any network architecture that can implement functions of the foregoing network elements is applicable to embodiments of this application.
4. Functions or network elements in the network architectures shown in FIG. 1 and FIG. 2 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.
5. Names of the network elements or the functions in the network architectures shown in FIG. 1 and FIG. 2 are defined only for ease of distinguishing between different functions, and should not constitute any limitation on this application. This application does not exclude a possibility of using other names in a 6G network and another future network. For example, in the 6G network, a part or all of the foregoing network elements may still use terms in 5G, or may use other names.
6. The SMF in FIG. 2 may include an A-SMF and an I-SMF.

It should be understood that, in this application, the SMF and the MB-SMF may be co-deployed, or may be separately deployed. This is not limited. In this application, the UPF and the MB-UPF may be co-deployed, or may be separately deployed. This is not limited.

Currently, an SMF responsible for processing an MBS-related function is an A-SMF, and the A-SMF is configured to process UE joining and quitting an MBS. Therefore, the A-SMF has an MBS processing function, that is, supports the MBS.

However, in an enhancing topology of SMF and UPF (enhancing topology of SMF and UPF, ETSUN) scenario, an I-SMF may be inserted into a control plane path of a PDU session. An AMF selects the I-SMF based on current location information of UE, and the AMF cannot sense whether the UE joins a multicast broadcast service (where a reason is that although the AMF has a UE-related context, for example, a UE context, the AMF cannot know whether the UE joins the multicast broadcast service; because a current request for joining the multicast broadcast service is carried in an N1 session management container, and the AMF does not parse content in the N1 session management container, the AMF cannot sense whether the UE joins the multicast broadcast service). Therefore, when selecting the I-SMF, the AMF does not consider whether the UE joins the multicast broadcast service. As a result, the I-SMF selected by the AMF may not have an MBS related function, or may be understood as not supporting the MBS.

In addition, when the I-SMF exists, the A-SMF cannot directly exchange a UE-related (per UE) N2 message with a base station by using the AMF (for example, receive, process, or send an N2 session management container (for example, PDU session modification transfer) related to an associated PDU session), where the N2 session management container includes parameter information related to a multicast broadcast service, for example, including QoS configuration information (QoS profile) corresponding to the multicast broadcast service, and a mapping relationship between a QoS flow identifier corresponding to a multicast/broadcast QoS flow and a quality of service index (QoS flow identifier, QFI) of a unicast QoS flow to which the multicast/broadcast QoS flow is mapped, and the I-SMF exchanges a UE-related N2 message with the base station. In addition, the I-SMF does not necessarily support the MBS. Therefore, regardless of whether the base station supports the MBS, data of the MBS can be transmitted only in a 5GC individual delivery manner. Consequently, a waste of network resources is caused, and network resource utilization is reduced.

Therefore, for the foregoing problem, this application provides a multicast/broadcast service communication method and a related apparatus, so that a selected I-SMF supports an MBS, thereby improving the foregoing problem.

For ease of understanding embodiments of this application, multicast/broadcast in this application is explained.

A multicast/broadcast manner may also be referred to as a 5GC shared multicast broadcast service traffic delivery method (5G core shared MBS traffic delivery method, or 5GC shared MBS traffic delivery method), or a 5G core network individual multicast broadcast service traffic delivery (5GC individual MBS traffic delivery) method. The multicast broadcast service may also be replaced with a multicast/broadcast session. This is not limited herein in this application.

The "multicast/broadcast" in this application is a concept in a broad sense, and may include multicast (multicast) or broadcast (broadcast). In other words, embodiments of this application may be applied to both multicast service transmission and broadcast service transmission.

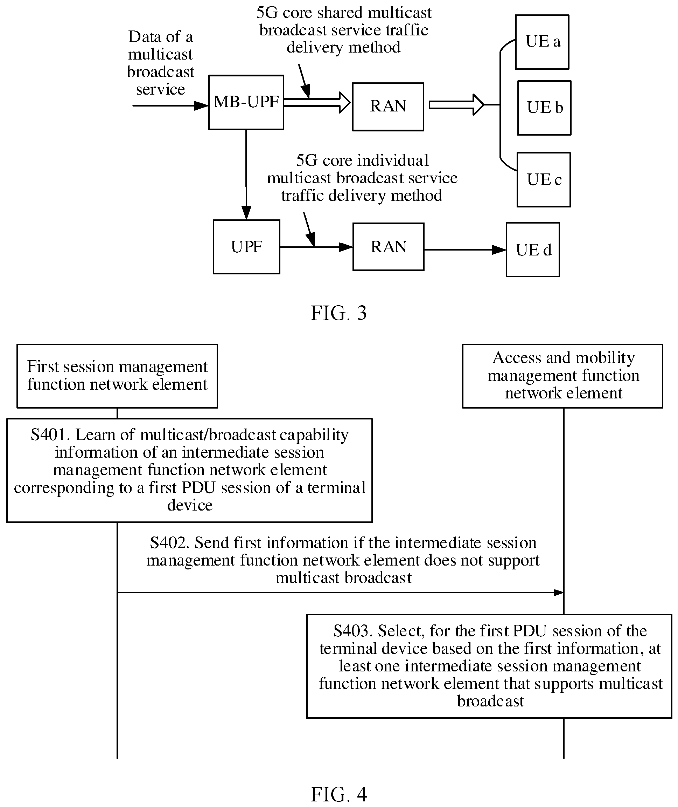

FIG. 3 is a schematic diagram of a multicast/broadcast function. As shown in FIG. 3, that an access network device supports a multicast broadcast service may be understood as that the access network device supports transmission of data of the multicast broadcast service by using a 5G core shared multicast broadcast service traffic delivery method. That the access network device does not support a multicast broadcast service may be understood as that the access network device does not support transmission of data of the multicast broadcast service by using a 5G core shared multicast broadcast service traffic delivery method, but supports transmission the data of the multicast broadcast service by using a 5G core independent multicast broadcast service traffic delivery method. After arriving at the access network device (for example, a RAN), the data of the multicast broadcast service is sent to a terminal device after being processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN.

In embodiments of this application, when the access network device does not support the multicast broadcast service, the data of the multicast broadcast service may be transmitted between the access network device and a user plane function network element by using the 5G core individual multicast broadcast service traffic delivery method. When the access network device supports the multicast broadcast service, data of a multicast service may be transmitted between the access network device and the user plane function network element by using the 5G core shared multicast broadcast service traffic delivery method. For example, as shown in FIG. 3, in the 5GC shared multicast broadcast service traffic delivery method, the data of the multicast service directly arrives at the RAN through an MB-UPF and an N3mb tunnel between the MB-UPF and the RAN, and the RAN may send, in a point-to-point (point to point, PTP) or point-to-multipoint (point to multi-point, PTM) manner, the data of the multicast service to the terminal device that joins a multicast session. In the 5G core individual multicast broadcast service traffic delivery method, the data of the multicast service arrives at the UPF through the MB-UPF, and then arrives at the RAN through an N3 tunnel (for example, a PDU session of the terminal) between the UPF and the RAN. The RAN sends the data to the terminal in a point-to-point manner.

That the access network device does not support the MBS may be understood as that the access network device does not support transmission of the data of the multicast service by using the 5G core shared multicast broadcast service traffic delivery method, that is, the access network device supports transmission of the data of the multicast service by only using the 5G core individual multicast broadcast service traffic delivery method. In other words, the data of the multicast service is sent to the terminal device by using a PDU session associated with the terminal device that joins the multicast session.

It should be understood that the multicast broadcast service may be described by using multicast broadcast service information. The multicast broadcast service information may include at least description information of the multicast broadcast service. The description information of the multicast broadcast service may include description information of one or more multicast broadcast service flows. The description information of the multicast broadcast service flow includes at least one of the following: a quality of service index of the multicast broadcast service flow, characteristic information (for example, a destination address, a destination port number, and a source address of the multicast broadcast service) of the multicast broadcast service flow, a QoS requirement (for example, a jitter, a delay, a packet loss rate, and a bandwidth) of the multicast broadcast service flow, and the like. The QoS requirement of the multicast broadcast service flow may be for establishing a multicast/broadcast QoS flow.

It should be further understood that the PDU session is at a terminal device granularity, and the multicast/broadcast session is at a service granularity. One PDU session of one terminal device may be associated with a plurality of multicast broadcast services. To be specific, the terminal device may join at least one plurality of multicast broadcast services by using the PDU session. One multicast/broadcast session can provide a service for one multicast broadcast service.

The foregoing briefly describes terms used in this application. Details are not described in the following embodiments. The following describes in detail a multicast/broadcast communication method provided in embodiments of this application with reference to accompanying drawings. Embodiments of this application may be applied to the network architecture shown in FIG. 2. This is not limited.

To better understand the embodiments, the following descriptions are provided herein.
1. In embodiments of this application, learning of (known) may be replaced with determining (determine), querying (inquery/query/discovery/search), detecting (detect), or obtaining (acquire or obtain).
2. In embodiments of this application, "indicate" may be replaced with "represent". In addition, in embodiments of this application, a PDU session is used as an example, and may be replaced with a session, a unicast session, or another term having a same function. This is not limited.
3. In this application, the SMF network element may be briefly referred to as an SMF, the AMF network element may be briefly referred to as an AMF, the NRF network element may be briefly referred to as an NRF, and the UPF network element may be briefly referred to as a UPF. In other words, in this application, the SMF may be replaced with a session management function network element, the AMF may be replaced with an access and mobility management function network element, the NRF may be replaced with a network repository function network element, and the UPF may be replaced with a user plane function network element.
4. In this specification, the term "and/or" is only a description of an association relationship between associated objects, and means that there may be three types of relationships. For example, A and/or B may mean that A exists alone, both A and B exist, and B exists alone. In addition, the character "/" in this specification generally indicates an "or" relationship between the associated objects.

FIG. 4 is a schematic diagram of a multicast/broadcast communication method 400 according to an embodiment of this application. Details are described below.

S401. A first session management function network element learns of multicast/broadcast capability information of an intermediate session management function network element corresponding to a first PDU session of a terminal device.

The first session management function network element may be a session management function network element configured to control (control) an anchor of the first PDU session, or the first session management function network element may be an anchor session management function, and the intermediate session management function network element corresponding to the first PDU session may be an intermediate session management function network element serving (served) the first PDU session.

It should be noted that the intermediate session management function network element may be a session management function network element selected by an access and mobility management function network element based on location information of the terminal device, or a session management function network element inserted/selected in a control plane path of the PDU session. The access and mobility management function network element does not sense multicast/broadcast information at a terminal device granularity, that is, does not sense whether the terminal device joins a multicast broadcast service. Therefore, the access and mobility management function network element may select an intermediate session management function network element according to a conventional technology (mainly based on current location information of the UE). As a result, the intermediate session management function network element selected by the access and mobility management function network element may not support the MBS.

The multicast/broadcast capability information of the intermediate session management function network element may indicate a multicast/broadcast capability of the intermediate session management function network element, in other words, may indicate whether the intermediate session management function network element supports a multicast broadcast service.

Specifically, the multicast/broadcast capability information of the intermediate session management function network element indicates whether the intermediate session management function network element supports a multicast broadcast service. Supporting a multicast broadcast service means that the intermediate session management function network element has a software processing module and/or hardware related to the multicast broadcast service, for example, supporting processing of a multicast/broadcast-related parameter or function. Specifically, the processing may include: involving in (involved in), managing (management), or controlling (control) a multicast/broadcast session establishment procedure; involving in, managing, or controlling a multicast broadcast service joining or quitting procedure of the terminal device; involving in, managing, or controlling multicast/broadcast session update; involving in, managing, or controlling a handover procedure after joining a multicast/broadcast session; or involving in, managing, or controlling a multicast broadcast service release procedure. In this application, "supporting a multicast broadcast service (support MBS)" may be replaced with "supporting multicast/broadcast".

In addition, the first PDU session may be used by the terminal device to join a first multicast broadcast service, the first PDU session is associated with the first multicast broadcast service, and the first multicast broadcast service is a service that the terminal device requests to join.

In an example, that the first PDU session is associated with the first multicast broadcast service may be understood as that a context of the first PDU session is associated with the first multicast broadcast service. Specifically, the terminal device may request to join the first multicast broadcast service by using a user plane message or a control plane message of the first PDU session.

Requesting to join the first multicast broadcast service by using the control plane message of the first PDU session may be as follows: The terminal device sends a PDU session modification request (PDU session modification request) or a PDU session establishment request (PDU session establishment request) that carries a join request (join request) or a join indication (join indication) and carries information about an identifier (for example, an MBS session ID, a TMGI, or an IP multicast address) of the first multicast broadcast service. Optionally, the first PDU session may be associated with the first multicast broadcast service in a manner of storing an identifier of the first multicast broadcast service in the context (associated PDU session context) corresponding to the first PDU session, and/or the first PDU session may be associated with the first multicast broadcast service in a manner of storing an identifier (UE ID, for example, an SUPI, a GPSI, a PEI, or an SUCI) of the terminal device in a context (MBS session context) corresponding to the first multicast broadcast service. For example, if the terminal device joins to watch CCTV-1 by using the control plane message of the first PDU session, the first PDU session is associated with one multicast broadcast service. If the terminal device further joins to watch CCTV-10, the first PDU session is associated with one other multicast broadcast service.

In another example, that the first PDU session is associated with the first multicast broadcast service may mean that the first PDU session is for a 5GC individual multicast broadcast service traffic delivery method of data of the first multicast broadcast service, and is, for example, for an operation such as joining or quitting the first multicast broadcast service by the terminal device.

In another example, that the first PDU session is associated with the first multicast broadcast service may be understood as that the first PDU session is used for 5GC individual multicast broadcast service traffic delivery, and the terminal device is enabled to involve in operation signaling of a session of the first multicast broadcast service. For example, the foregoing operation may be joining or quitting the first multicast broadcast service.

S402. If the intermediate session management function network element does not support a multicast broadcast service, the first session management function network element sends first information to the access and mobility management function network element.

Correspondingly, the access and mobility management function network element receives the first information from the first session management function network element.

The first information is for triggering the access and mobility management function network element to select, for the first multicast broadcast service of the terminal device, at least one intermediate session management function network element that supports a multicast broadcast service.

Specifically, the first information may be an independent message, or may be an information element in a message. A form of the first information is not limited in this application.

Specifically, when the intermediate session management function network element does not support a multicast broadcast service, the first session management function network element sends the first information to the access and mobility management function network element, to trigger the access and mobility management function network element to select, for the first PDU session of the terminal device, at least one intermediate session management function network element that supports a multicast broadcast service. The first information may include a first indication (indication) and/or a first cause (cause), and the first indication and/or the first cause indicate/indicates to select, for the first PDU session of the terminal device, at least one intermediate session management function network element that supports a multicast broadcast service. Further, the first information is carried in a PDU session update reply message.

S403. The access and mobility management function network element selects, for the first PDU session of the terminal device based on the first information, at least one intermediate session management function network element that supports a multicast broadcast service.

Specifically, the access and mobility management function network element may select, for the first PDU session of the terminal device based on the first information, at least one intermediate session management function network element that supports a multicast broadcast service, and may further release a resource that is related to the first PDU session and that is in an intermediate session management function network element previously selected for the first PDU session.

The first information may be carried in a PDU session context status notification (Nsmf_PDUSession_SMContextStatusNotify) or a PDU session status notification (Nsmf_PDUSession_StatusNotify); the first information may be carried in a new message; or the first information may be a new message. The first information is for triggering (trigger) selection of an intermediate session management function network element for the first PDU session. Specifically, the first information may be for triggering the access and mobility management function network element to select, for the first PDU session, at least one intermediate session management function network element that supports a multicast broadcast service.

It should be noted that, to learn of the multicast/broadcast capability information of the intermediate session management function network element by the first session management function network element, the following implementations may be used.

In a possible implementation, step S401 includes: The first session management function network element learns of the multicast/broadcast capability of the intermediate session management function network element by receiving the multicast/broadcast capability information of the intermediate session management function network element from a core network element.

The core network element may be a network repository function network element, the access and mobility management function network element, or the intermediate session management function network element. This is not limited.

Specifically, the first session management function network element may learn of the multicast/broadcast capability information of the intermediate session management function network element by receiving a first message from the core network element. The first message includes the multicast/broadcast capability information of the intermediate session management function network element.

In another possible implementation, the method 400 further includes: The first session management function network element sends a second message to the core network element. Correspondingly, the core network element receives the second message from the first session management function network element.

The second message may be for triggering the core network element to send the multicast/broadcast capability information of the intermediate session management function network element to the first session management function network element.

For example, the second message may include second information, and the second information is for triggering the core network element to send the multicast/broadcast capability information of the intermediate session management function network element to the first session management function network element.

Further, in an example, after receiving the second message, the core network element may send the multicast/broadcast capability information of the intermediate session management function network element to the first session management function network element.

In another example, when the intermediate session management function network element supports a multicast broadcast service, two implementations may be used: The core network element does not reply to the first session management function network element for the second message, to indicate that the intermediate session management function network element supports a multicast broadcast service; or the core network element replies to the first session management function network element for the second message, to indicate that the intermediate session management function network element supports a multicast broadcast service.

In still another example, when the intermediate session management function network element does not support a multicast broadcast service, two implementations may be used: The core network element does not reply to the first session management function network element for the second message, to indicate that the intermediate session management function network element does not support a multicast broadcast service; or the core network element replies to the first session management function network element for the second message, to indicate that the intermediate session management function network element does not support a multicast broadcast service.

When the core network element includes the access and mobility management function network element, the second message may include at least one of a subscribed event, a notification correlation identifier, an event notification uniform resource identifier, or a network function instance identifier. The network function instance identifier may be an identifier of the intermediate session management function network element.

When the core network element includes the network repository function network element, the second message may include at least one of a network function type, a network function instance identifier, a network function domain name, or an identifier of the intermediate session management function network element.

When the core network element includes the intermediate session management function network element, the second message may include information for querying the multicast/broadcast capability information of the intermediate session management function network element.

Further, the first message may be a response message of the second message. For example, when the second message is a PDU session update request (for example, Nsmf_PDUSession_Update Request) message, the first message may be a PDU session update reply (for example, Nsmf_PDUSession_Update Response) message. When the second message is a network function query request (Nnrf_NFDiscovery_Request) message, the first message may be a network function query response (for example, Nnrf_NFDiscovery_Response) message. When the second message is an event subscription request (Namf_EventExposure Subscribe Request) message, the first message may be an event subscription notification (for example, Namf_EventExposure Notify) message.

The first message and the second message may further include at least one of an identifier of the first multicast broadcast service, a name of the first multicast broadcast service, or QoS information related to the first multicast broadcast service.

In another possible implementation, to learn of the multicast/broadcast capability information of the intermediate session management function network element by the first session management function network element, step S401 further includes the following steps.

The first session management function network element sends a third message to the intermediate session management function network element, where the third message includes at least one of the following:
identification information of the first multicast broadcast service, multicast/broadcast quality of service QoS information of the first multicast broadcast service, or unicast QoS information corresponding to the multicast/broadcast QoS information of the first multicast broadcast service;
the first session management function network element receives a fourth message from the intermediate session management function network element, where the fourth message includes a part or all of information in the third message; and
the first session management function network element learns of the multicast/broadcast capability information of the intermediate session management function network element based on the fourth message.

The unicast QoS information corresponding to the multicast/broadcast QoS information of the first multicast broadcast service may be a unicast QoS flow that is for 5GC individual multicast broadcast service traffic delivery in the associated PDU session. The unicast QoS flow is obtained through mapping (mapped) of a multicast/broadcast QoS flow in a multicast/broadcast session corresponding to the first multicast broadcast service.

Based on the foregoing solution, the first session management function network element may obtain the multicast/broadcast capability information of the intermediate session management function network element by using the core network element; and when the intermediate session management function network element does not support a multicast broadcast service, send, to the access and mobility management function network element, the first information for triggering selection, for the first PDU session of the terminal device, of at least one intermediate session management function network element that supports a multicast broadcast service. In this way, the access and mobility management function network element can effectively select, for the first PDU session, the intermediate session management function network element that supports an MBS. Therefore, the intermediate session management function network element selected by the access and mobility management function network element supports a multicast broadcast service, and a base station may transmit data to the terminal device in a multicast/broadcast manner, thereby saving network resources and improving network resource utilization.

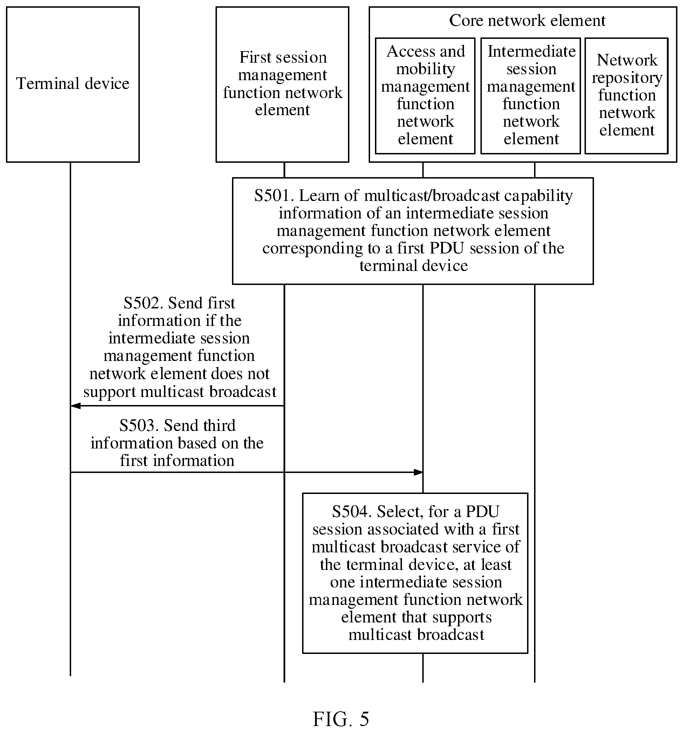

FIG. 5 is a schematic diagram of a multicast/broadcast communication method 500 according to an embodiment of this application. As shown in FIG. 5, the method 500 may include the following steps.

S501. A first session management function network element learns of multicast/broadcast capability information of an intermediate session management function network element corresponding to a first PDU session of a terminal device.

Specifically, for descriptions of learning of, by the first session management function network element, the multicast/broadcast capability information of the intermediate session management function network element corresponding to the first PDU session of the terminal device, refer to related descriptions of learning of, by the first session management function network element, the multicast/broadcast capability information of the intermediate session management function network element corresponding to the first PDU session of the terminal device in S401. For brevity, details are not described herein in this application.

In a possible implementation, S501 further includes: The first session management function network element learns of a multicast/broadcast capability of the intermediate session management function network element by receiving the multicast/broadcast capability information of the intermediate session management function network element from a core network element, where the core network element includes any one of a network repository function network element, an access and mobility management function network element, or the intermediate session management function network element. The first multicast broadcast service is a service that the terminal device requests to join.

Specifically, for learning of the multicast/broadcast capability of the intermediate session management function network element by the first session management function network element by receiving the multicast/broadcast capability information of the intermediate session management function network element from the core network element, refer to related descriptions in the method 400. For brevity, details are not described herein in this application.

In another possible implementation, S501 further includes: The first session management function network element sends a third message to the intermediate session management function network element, where the third message includes at least one of the following information: identification information of the first multicast broadcast service, multicast/broadcast quality of service QoS information of the first multicast broadcast service, or unicast QoS information corresponding to the multicast/broadcast QoS information of the first multicast broadcast service.

Then, the first session management function network element receives a fourth message from the intermediate session management function network element, where the fourth message includes a part or all of information in the third message.

Finally, the first session management function network element may learn of the multicast/broadcast capability information of the intermediate session management function network element based on the part or all of the information in the third message included in the fourth message.

Optionally, in another implementation scenario of the foregoing embodiment, the method 500 further includes: The first session management function network element sends a second message to the core network element. Correspondingly, the core network element receives the second message from the first session management function network element.

Specifically, for descriptions of sending the second message by the first session management function network element to the core network element, refer to related descriptions of sending the second message by the first session management function network element to the core network element in the method 400. For brevity, details are not described herein in this application.

S502. If the intermediate session management function network element does not support a multicast broadcast service, the first session management function network element sends first information to the terminal device. Correspondingly, the terminal device receives the first information from the first session management function network element.

The first information indicates that the intermediate session management function network element does not support a multicast broadcast service.

Specifically, after obtaining the multicast/broadcast capability of the intermediate session management function network element, if the intermediate session management function network element does not support a multicast broadcast service, the first session management function network element may send, to the terminal device, the first information indicating that the intermediate session management function network element does not support a multicast broadcast service. Further, the first information may be independent information, or may be an information element in a piece of information. A form of the first information is not limited in this application.

Further, the first information may be carried in a PDU session establishment reject message or a PDU session modification reject message. On one hand, the first information may be a first cause (for example, a PDU session establishment reject cause) in the PDU session establishment reject message or a first indication (for example, a PDU session establishment reject indication) in the PDU session establishment reject message. On the other hand, the first information may be a first cause (for example, a PDU session modification reject cause) in the PDU session modification reject message or a first indication (for example, a PDU session modification reject indication) of the PDU session modification reject message. Both the first cause and the first indication may indicate that there is an intermediate session management function network element on a PDU session path, and the intermediate session management function network element does not support a multicast broadcast service. Both the PDU session establishment reject message and the PDU session modification reject message indicate that the terminal device is refused to join the first multicast broadcast service. In an implementation, the first information may exist in a PDU session establishment reject message or a PDU session modification reject message.

The PDU session establishment reject message or the PDU session modification reject message may include an identifier of the first PDU session.

S503. The terminal device sends third information to the access and mobility management function network element based on the first information. Correspondingly, the access and mobility management function network element receives the third information from the terminal device.

The third information may be for triggering the access and mobility management function network element to select, for a PDU session associated with the first multicast broadcast service of the terminal device, at least one intermediate session management function network element that supports a multicast broadcast service.

The third information may be an independent message, or may be an information element in a message. A form of the third information is not limited in this application. For example, the third information may be carried in a NAS message.

Specifically, the third information may include a second indication and/or a second cause, and the second indication and/or the second cause may indicate to select, for the PDU session associated with the first multicast broadcast service of the terminal device, at least one intermediate session management function network element that supports a multicast broadcast service.

For example, the third information is carried in a first NAS message, and the first NAS message may further carry a first join request, an identifier of the first PDU session, and an identifier of the first multicast broadcast service. The first join request is used by the terminal device to request to join the first multicast broadcast service by using the first PDU session, and the first PDU session belongs to the PDU session associated with the first multicast broadcast service of the terminal device. The second indication and/or the second cause may indicate to select, for the first PDU session of the terminal device, at least one intermediate session management function network element that supports a multicast broadcast service (for example, in a scenario in which subscription information allows the terminal device to use only a session and service continuity mode (session and service continuity mode, SSC mode) 1).

For example, the third information is carried in a second NAS message, and the second NAS message may further include a second join request, an identifier of a second PDU session, and an identifier of the first multicast broadcast service. The second join request may be used by the terminal device to request to join the first multicast broadcast service by using the second PDU session, and the second PDU session belongs to the PDU session associated with the first multicast broadcast service of the terminal device. The second indication (indication) and/or the second cause (cause) may indicate to select, for the second PDU session of the terminal device, at least one intermediate session management function network element that supports a multicast broadcast service (for example, in a scenario in which subscription information allows the terminal device to re-join the multicast broadcast service in a PDU session re-establishment manner by using an SSC mode 2 or 3).

The first NAS message or the second NAS message further includes an N1 session management container (for example, a PDU session modification request message or a PDU session establishment request message), and the identifier of the first multicast broadcast service and the second join request may be carried in the N1 session management container.

S504. The access and mobility management function network element selects, for the PDU session associated with the first multicast broadcast service of the terminal device, at least one intermediate session management function network element that supports a multicast broadcast service.

Specifically, after receiving the third information, the access and mobility management function network element may perform step S504.

Based on the foregoing solution, the first session management function network element may obtain the multicast/broadcast capability information of the intermediate session management function network element by using the core network element; and when the intermediate session management function network element does not support a multicast broadcast service, send, to the terminal device, information indicating that the intermediate session management function network element does not support a multicast broadcast service. The terminal device may send the third information to the access and mobility management function network element based on the information, so that the access and mobility management function network element selects, for the PDU session associated with the first multicast broadcast service of the terminal device, at least one intermediate session management function network element that supports a multicast broadcast service. Therefore, the intermediate session management function network element selected by the access and mobility management function network element supports a multicast broadcast service, and a base station may transmit data to the terminal device in a multicast/broadcast manner, thereby saving network resources and improving network resource utilization.

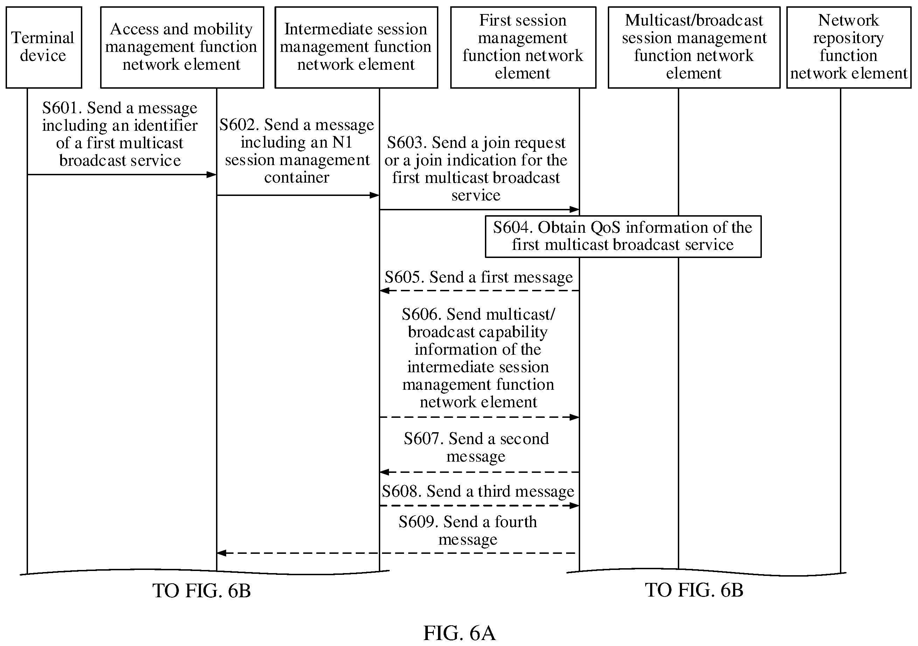

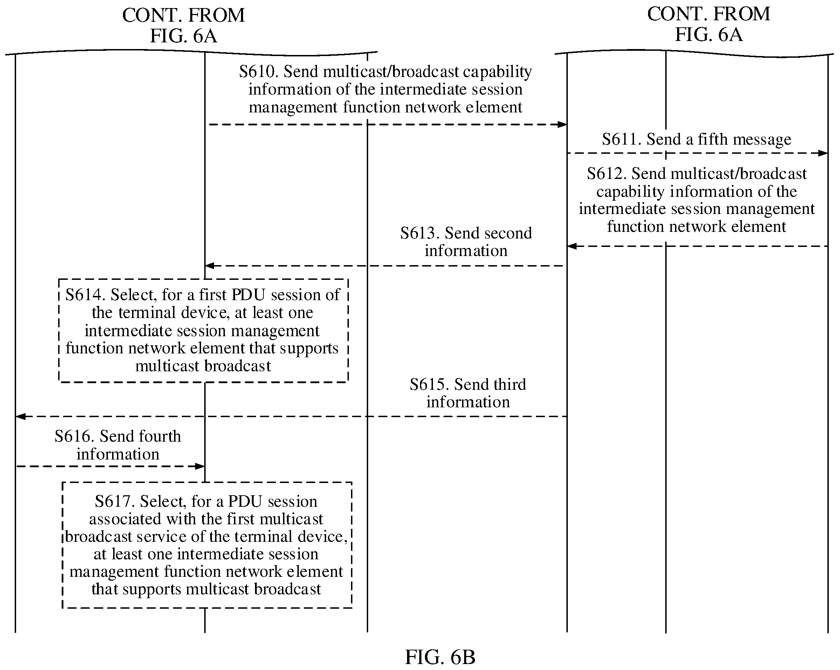

FIG. 6A and FIG. 6B are a schematic diagram of a multicast/broadcast communication method 600 according to an embodiment of this application. As shown in FIG. 6A and FIG. 6B, the method 600 may include the following steps.

S601. A terminal device sends a message including an identifier of a first multicast broadcast service to an access and mobility management function network element.

Correspondingly, the access and mobility management function network element receives, from the terminal device, the message that includes the identifier of the first multicast broadcast service.

In an implementation, the message may be a NAS message sent by the terminal device.

Specifically, the NAS message may include an N1 session management container (N1 SM container). The N1 session management container may include a PDU session modification request (PDU session modification request). The PDU session modification request includes the identifier of the first multicast broadcast service, and may further include a join request/join indication (join request or join indication) for the first multicast broadcast service.

The first multicast broadcast service is a service that the terminal device requests to join.

S602. The access and mobility management function network element sends the message including the N1 session management container (N1 session management container, N1 SM container) to an intermediate session management function network element.

Correspondingly, the intermediate session management function network element receives, from the access and mobility management function network element, the message including the N1 session management container.

The access and mobility management function network element may determine, based on location information of the terminal device reported by a base station and service area information of a first session management function network element, whether a current location of the terminal device is covered by a service area of the first session management function network element. If the current location of the terminal device is not covered by the service area of the first session management function network element, the access and mobility management function network element selects an intermediate session management function network element based on the current location of the terminal device. The intermediate session management function network element may be a session management function network element existing on a PDU session path or a session management function network element serving a PDU session. The first session management function network element may be an anchor session management function network element, or may be any session management function network element configured to control an anchor of a first PDU session of the terminal device. This is not limited herein in this application.

Specifically, in an implementation, the access and mobility management function network element may send a PDU session context update request (Nsmf_PDUSession_UpdateSMContext Request) message to the intermediate session management function network element. The PDU session context update request message may include a part or all of information included in the N1 session management container sent by the terminal device to the access and mobility management function network element, for example, may include the identifier of the first multicast broadcast service, and the join request or the join indication for the first multicast broadcast service. In addition, the PDU session context update request message further includes an identity of the first session management function network element.

S603. The intermediate session management function network element sends a part or all (for example, a message including the join request or the join indication for the first multicast broadcast service) of the information included in the N1 session management container to the first session management function network element.

Correspondingly, the first session management function network element receives the part or all of the information in the N1 session management container from the intermediate session management function network element.

The intermediate session management function network element uses the message including the join request or the join indication for the first multicast broadcast service to send the N1 session management container, based on the identity of the first session management function network element and/or a session management context identifier (SM context ID) corresponding to the PDU session. In an implementation, the message including the join request or the join indication for the first multicast broadcast service may be a PDU session update request (Nsmf_PDUSession_Update Request) message, and the PDU session update request message includes the N1 SM container (for example, the PDU session modification request in this procedure). The PDU session modification request includes the identifier of the first multicast broadcast service and the join request/join indication for the first multicast broadcast service.

S604. The first session management function network element obtains QoS information of the first multicast broadcast service.

If determining, based on the identifier of the first multicast broadcast service, that the first session management function network element does not store information about the first multicast broadcast service, the first session management function network element initiates a request (for example, the request message may be a context status subscription request (Nmbsmf_ MBSSession_ContextStatusSubscribe request) message) for obtaining the information about the first multicast broadcast service to a multicast/broadcast session management function network element (MB-SMF), and obtains the information about the first multicast broadcast service from the MB-SMF.

Specifically, the information about the first multicast broadcast service may include policy and charging control rule (policy and charging control rule, PCC rule) information of the first multicast broadcast service, and the PCC rule information may include measurement information, data flow (service data flow) information, QoS requirement information, and charging policy information that are related to the first multicast broadcast service.

Optionally, in another implementation scenario of the foregoing embodiment, the method 600 further includes S605: The first session management function network element sends a first message to the intermediate session management function network element. Correspondingly, the intermediate session management function network element receives the first message from the first session management function network element.

After receiving the N1 SM container (for example, the PDU session update request message in this procedure), and determining that the terminal device requests to join the first multicast broadcast service, the first session management function network element temporarily does not reply to the PDU session update request message, but sends the first message to the intermediate session management function network element, where the first message is for triggering sending of multicast/broadcast capability information of the intermediate session management function network element to the first session management function network element. Further, the first message may be a PDU session update request message.

Specifically, the first message may include at least one of the identifier of the first multicast broadcast service, a name of the first multicast broadcast service, or QoS information related to the first multicast broadcast service.

In a possible implementation, the first message may include first information, and the first information is for triggering a core network element to send the multicast/broadcast capability information of the intermediate session management function network element to the first session management function network element.

In another possible implementation, the first message may include information for querying the multicast/broadcast capability information of the intermediate session management function network element.

For example, the first message may be the PDU session update request (for example, Nsmf_PDUSession _Update Request) message.

Optionally, in another implementation scenario of the foregoing embodiment, the method 600 further includes S606: The intermediate session management function network element sends the multicast/broadcast capability information of the intermediate session management function network element to the first session management function network element. Correspondingly, the first session management function network element receives the multicast/broadcast capability information of the intermediate session management function network element from the intermediate session management function network element.

The first session management function network element may receive the multicast/broadcast capability information of the intermediate session management function network element from the intermediate session management function network element.

For example, the multicast/broadcast capability information of the intermediate session management function network element may be carried in a PDU session update reply (for example, Nsmf_PDU session_update response) message.

Further, the PDU session update reply message may include at least one of the identifier of the first multicast broadcast service, the name of the first multicast broadcast service, or the QoS information related to the first multicast broadcast service.

Optionally, in another implementation scenario of the foregoing embodiment, the method 600 further includes S607: The first session management function network element sends a second message to the intermediate session management function network element. Correspondingly, the intermediate session management function network element receives the second message from the first session management function network element.

After receiving the N1 SM container (for example, the PDU session update request message in this procedure), and determining that the terminal device requests to join the first multicast broadcast service, the first session management function network element temporarily does not reply to the PDU session update request message, but sends the second message to the intermediate session management function network element, where the second message includes at least one of the following information: identification information of the first multicast broadcast service, multicast/broadcast quality of service QoS information of the first multicast broadcast service, or unicast QoS information corresponding to multicast/broadcast QoS information of the first multicast broadcast service.

Optionally, in another implementation scenario of the foregoing embodiment, the method 600 further includes S608: The intermediate session management function network element sends a third message to the first session management function network element. Correspondingly, the first session management function network element receives the third message from the intermediate session management function network element.

The third message includes a part or all of information in the second message. Therefore, the first session management function network element may learn of the multicast/broadcast capability information of the intermediate session management function network element based on the part or all of the information in the second message included in the third message.

Optionally, in another implementation scenario of the foregoing embodiment, the method 600 further includes S609: The first session management function network element sends a fourth message to the access and mobility management function network element. Correspondingly, the access and mobility management function network element receives the fourth message from the intermediate session management function network element.

Specifically, after receiving the N1 SM container (for example, the PDU session update request message in this procedure), and determining that the terminal device requests to join the first multicast broadcast service, the first session management function network element temporarily does not reply to the PDU session update request message, but sends the fourth message to the access and mobility management function network element, where the fourth message is for triggering sending of multicast/broadcast capability information of the intermediate session management function network element to the first session management function network element.

The fourth message may include at least one of a subscribed event, a notification correlation identifier, an event notification uniform resource identifier, or a network function instance identifier. The network function instance identifier may be, for example, an identifier of the intermediate session management function network element.

Further, the fourth message may be an event subscription request (for example, Namf_EventExposure Subscribe) message.

Optionally, in another implementation scenario of the foregoing embodiment, the method 600 further includes S610: The access and mobility management function network element sends the multicast/broadcast capability information of the intermediate session management function network element to the first session management function network element. Correspondingly, the first session management function network element receives the multicast/broadcast capability information of the intermediate session management function network element from the access and mobility management function network element.

Specifically, after receiving the fourth message, the access and mobility management function network element may send the multicast/broadcast capability information of the intermediate session management function network element to the first session management function network element.

The multicast/broadcast capability information of the intermediate session management function network element may be carried in a message. For example, the message may be an event subscription notification (for example, Namf_EventExposure Notify) message.

Optionally, in another implementation scenario of the foregoing embodiment, the method 600 further includes S611: The first session management function network element sends a fifth message to a network repository function network element. Correspondingly, the network repository function network element receives the fifth message from the first session management function network element.

Specifically, after receiving the N1 SM container (for example, the PDU session update request message in this procedure), and determining that the terminal device requests to join the first multicast broadcast service, the first session management function network element temporarily does not reply to the PDU session update request message, but sends the fifth message to the network repository function network element. The fifth message is for triggering sending of the multicast/broadcast capability information of the intermediate session management function network element to the first session management function network element.

The fifth message may include at least one of a network function type, a network function instance identifier, a network function domain name, or an identifier of the intermediate session management function network element.

Further, the fifth message may be a network function query request (for example, Nnrf_NFDiscovery_Request) message.

Optionally, in another implementation scenario of the foregoing embodiment, the method 600 further includes S612: The network repository function network element sends the multicast/broadcast capability information of the intermediate session management function network element to the first session management function network element. Correspondingly, the first session management function network element receives the multicast/broadcast capability information of the intermediate session management function network element from the network repository function network element.

The multicast/broadcast capability information of the intermediate session management function network element may be carried in a message. For example, the message may be a network function query response (for example, Nnrf_NFDiscovery_Response) message.

Further, in an example, the intermediate session management function network element, the access and mobility management function network element, or the network repository function network element may send the multicast/broadcast capability information of the intermediate session management function network element to the first session management function network element after receiving the message for triggering sending of the multicast/broadcast capability information of the intermediate session management function network element to the first session management function network element.

In another example, when the intermediate session management function network element supports a multicast broadcast service, two implementations may be used: The intermediate session management function network element, the access and mobility management function network element, or the network repository function network element may not reply to the first session management function network element with the message for triggering sending of the multicast/broadcast capability information of the intermediate session management function network element to the first session management function network element, to indicate that the intermediate session management function network element supports a multicast broadcast service. Alternatively, the intermediate session management function network element, the access and mobility management function network element, or the network repository function network element replies to the first session management function network element with the message for triggering sending of the multicast/broadcast capability information of the intermediate session management function network element to the first session management function network element, to indicate that the intermediate session management function network element supports a multicast broadcast service.

In still another example, when the intermediate session management function network element does not support a multicast broadcast service, two implementations may be used: The intermediate session management function network element, the access and mobility management function network element, or the network repository function network element may not reply to the first session management function network element with the message for triggering sending of the multicast/broadcast capability information of the intermediate session management function network element to the first session management function network element, to indicate that the intermediate session management function network element does not support a multicast broadcast service. Alternatively, the intermediate session management function network element, the access and mobility management function network element, or the network repository function network element replies to the first session management function network element with the message for triggering sending of the multicast/broadcast capability information of the intermediate session management function network element to the first session management function network element, to indicate that the intermediate session management function network element does not support a multicast broadcast service.

It should be understood that in the foregoing solution, when S605 and S606 are performed, S607 to S612 may not be performed; when S607 and S608 are performed, S605, S606, and S609 to S612 may not be performed; when S609 and S610 are performed, S605 to S608, S611, and S612 may not be performed; and when S611 and S612 are performed, S605 to S610 may not be performed.

Optionally, in another implementation scenario of the foregoing embodiment, the method 600 further includes S613: The first session management function network element sends second information to the access and mobility management function network element. Correspondingly, the access and mobility management function network element receives the second information from the first session management function network element.

The second information may be for triggering the access and mobility management function network element to select, for the first PDU session of the terminal device, at least one intermediate session management function network element that supports a multicast broadcast service. Specifically, the second information may be an independent message, or may be an information element in a message. A form of the second information is not limited in this application.

Specifically, when the intermediate session management function network element does not support a multicast broadcast service, the first session management function network element sends the second information to the access and mobility management function network element, to trigger the access and mobility management function network element to select, for the first PDU session of the terminal device, at least one intermediate session management function network element that supports a multicast broadcast service. The second information may include a first indication and/or a first cause, and the first indication and/or the first cause indicate/indicates to select, for the first PDU session that is for the terminal device to join the first multicast broadcast service, at least one intermediate session management function network element that supports a multicast broadcast service.

Further, the second information may be carried in a PDU session context status notification (Nsmf_PDUSession_SMContextStatusNotify) or a PDU session status notification (Nsmf_PDUSession_StatusNotify); the second information may be carried in a new message; or the second information may be a new message. The second information is for triggering (trigger) the access and mobility management function network element to select, for the first PDU session, at least one intermediate session management function network element that supports a multicast broadcast service.

Optionally, in another implementation scenario of the foregoing embodiment, the method 600 further includes S614: The access and mobility management function network element selects, for the first PDU session of the terminal device, at least one intermediate session management function network element that supports a multicast broadcast service.

Specifically, the access and mobility management function network element may select, for the first PDU session of the terminal device based on the second information, at least one intermediate session management function network element that supports a multicast broadcast service, and release a resource related to a previously selected intermediate session management function network element.

Optionally, in another implementation scenario of the foregoing embodiment, the method 600 further includes S615: The first session management function network element sends third information to the terminal device.

Correspondingly, the terminal device receives the third information from the first session management function network element.

The third information may indicate that the intermediate session management function network element does not support a multicast broadcast service.

Specifically, after obtaining the multicast/broadcast capability information of the intermediate session management function network element, if the intermediate session management function network element does not support a multicast broadcast service, the first session management function network element may send, to the terminal device, the third information indicating that the intermediate session management function network element does not support a multicast broadcast service. The third information may be carried in a PDU session establishment reject message or a PDU session modification reject message. The PDU session establishment reject message indicates that the terminal device is refused to join the first multicast broadcast service, and the PDU session modification reject message indicates the terminal device to re-initiate joining the first multicast broadcast service. The third information may be a second indication or a second cause in the PDU session establishment reject message. Alternatively, the third information may be a third indication or a third cause in the PDU session modification reject message. The second indication, the second cause, the third indication, or the third cause indicates that there is an intermediate session management function network element on the PDU session path, and the intermediate session management function network element does not support a multicast broadcast service. In an implementation, the third information may exist in an N1 session management container. For example, the N1 session management container may be the PDU session establishment reject message or the PDU session modification reject message.

Further, the PDU session establishment reject message or the PDU session modification reject message may include an identifier of the first PDU session.

Optionally, in another implementation scenario of the foregoing embodiment, the method 600 further includes S616: The terminal device sends fourth information to the access and mobility management function network element. Correspondingly, the access and mobility management function network element receives the fourth information from the terminal device.

The fourth information is for triggering the access and mobility management function network element to select, for a PDU session associated with the first multicast broadcast service of the terminal device, at least one intermediate session management function network element that supports a multicast broadcast service. Further, the fourth information may exist in a NAS message.

Specifically, the fourth information may include fourth indication information and/or a fourth cause, and the fourth indication information and/or the fourth cause indicate/indicates to select, for the PDU session associated with the first multicast broadcast service of the terminal device, at least one intermediate session management function network element that supports a multicast broadcast service.

For example, the fourth information is carried in a first NAS message, and the first NAS message further carries a first join request, an identifier of the first PDU session, and the identifier of the first multicast broadcast service. The first join request is used by the terminal device to request to join the first multicast broadcast service by using the first PDU session. The fourth indication information and/or the fourth cause may indicate to select, for the first PDU session of the terminal device, at least one intermediate session management function network element that supports a multicast broadcast service (for example, in a scenario in which subscription information allows the terminal device to use only an SSC mode 1). The first PDU session belongs to the PDU session associated with the first multicast broadcast service of the terminal device.

For example, the fourth information is carried in a second NAS message, and the second NAS message further includes a fourth join request, an identifier of a second PDU session, and an identifier of the first multicast broadcast service. The fourth join request is used by the terminal device to request to join the first multicast broadcast service by using the second PDU session, and the second PDU session belongs to the PDU session associated with the first multicast broadcast service of the terminal device. The fourth indication information and/or the fourth cause may indicate to select, for the second PDU session of the terminal device, at least one intermediate session management function network element that supports a multicast broadcast service (for example, in a scenario in which subscription information allows the terminal device to re-join the multicast broadcast service in a PDU session re-establishment manner by using an SSC mode 2 or 3).

The PDU session modification request message or the PDU session establishment request message includes the identifier of the first multicast broadcast service.

Optionally, in another implementation scenario of the foregoing embodiment, the method 600 further includes S617: The access and mobility management function network element selects, for the PDU session associated with the first multicast broadcast service of the terminal device, at least one intermediate session management function network element that supports a multicast broadcast service.

Specifically, after receiving the fourth information, the access and mobility management function network element selects, for the PDU session associated with the first multicast broadcast service of the terminal device, at least one intermediate session management function network element that supports a multicast broadcast service, and releases a resource related to a previously selected intermediate session management function network element.

It should be understood that in the foregoing solution, if S613 and S614 are performed, S615 to S617 are not performed; or if S615 to S617 are performed, S613 and S614 are not performed.

Based on the foregoing solution, after receiving the request for joining the first PDU session from the terminal device, the first session management function network element does not directly respond, but obtains the multicast/broadcast capability information of the intermediate session management function network element by using the access and mobility management function network element, the intermediate session management function network element, or the network repository function network element. When the intermediate session management function network element does not support a multicast broadcast service, the first session management function network element sends, to the access and mobility management function network element, the second information for triggering the access and mobility management function network element to select, for the first PDU session of the terminal device, at least one intermediate session management function network element that supports a multicast broadcast service, so that the access and mobility management function network element can select, for the first PDU session of the terminal device based on the information, at least one intermediate session management function network element that supports a multicast broadcast service. Alternatively, the first session management function network element sends the third information indicating that the intermediate session management function network element does not support a multicast broadcast service to the terminal device, so that the terminal device can send, to the access and mobility management function network element based on the third information, the fourth information for triggering selection, for the PDU session associated with the first multicast broadcast service, of at least one intermediate session management function network element that supports a multicast broadcast service, and the access and mobility management function network element can select, for the PDU session associated with the first multicast broadcast service based on the information, at least one intermediate session management function network element that supports a multicast broadcast service. Therefore, the intermediate session management function network element selected by the access and mobility management function network element supports a multicast broadcast service, and a base station may transmit data to the terminal device in a multicast/broadcast manner, thereby saving network resources and improving network resource utilization.

It may be understood that the examples in FIG. 4 to FIG. 6A and FIG. 6B in embodiments of this application are merely intended to help a person skilled in the art understand embodiments of this application. Within the scope of the independent claims, a person skilled in the art can apparently make various equivalent modifications or changes to the examples shown in FIG. 4 to FIG. 6A and FIG. 6B.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in embodiments of this application, some message names, such as a path switch requirement message or a path switch request message, are involved. It should be understood that the message names do not limit the protection scope of embodiments of this application.

It may be further understood that in the foregoing method embodiments, the method and the operation implemented by the terminal device may also be implemented by a component (for example, a chip or a circuit) of the terminal device. In addition, the method and the operation implemented by a network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

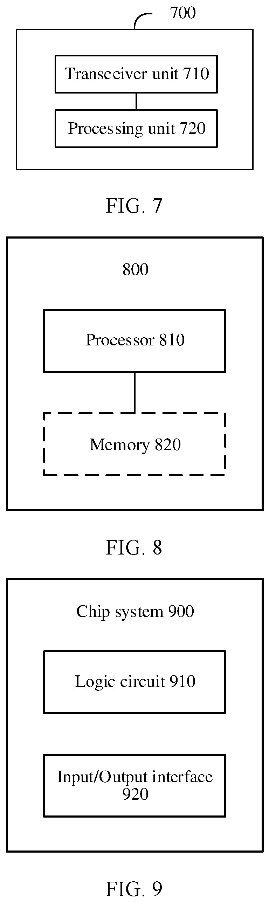

FIG. 7 is a schematic block diagram of a multicast/broadcast communication apparatus 700 according to an embodiment of this application. The apparatus 700 includes a transceiver unit 710, and the transceiver unit 710 may be configured to implement a corresponding communication function. The transceiver unit 710 may also be referred to as a communication interface or a communication unit.

Optionally, the apparatus 700 may further include a processing unit 720, and the processing unit 720 may be configured to perform data processing.

Optionally, the apparatus 700 further includes a storage unit. The storage unit may be configured to store instructions and/or data. The processing unit 720 may read the instructions and/or the data in the storage unit, so that the apparatus implements actions of the first session management function network element in the foregoing method embodiments.

In a design, the apparatus 700 is configured to perform actions performed by the first session management function network element in the foregoing method embodiments.

The apparatus 700 may be configured to perform actions performed by the first session management function network element in the foregoing method embodiments. In this case, the apparatus 700 may be the first session management function network element or a component of the first session management function network element. The transceiver unit 710 is configured to perform sending and receiving related operations on a first session management function network element side in the foregoing method embodiments. The processing unit 720 is configured to perform processing related operations on the first session management function network element side in the foregoing method embodiments.

In a possible implementation, the transceiver unit 710 is configured to: learn of multicast/broadcast capability information of an intermediate session management function network element corresponding to a first PDU session of a terminal device, where the first PDU session is used by the terminal device to join a first multicast broadcast service, and the first PDU session is associated with the first multicast broadcast service; and
if the intermediate session management function network element does not support a multicast broadcast service, send first information to an access and mobility management function network element, where the first information is for triggering the access and mobility management function network element to select, for the first PDU session of the terminal device, at least one intermediate session management function network element that supports a multicast broadcast service.

Optionally, the transceiver unit 710 is specifically configured to receive the multicast/broadcast capability information of the intermediate session management function network element from a core network element, where the core network element includes any one of a network repository function network element, the access and mobility management function network element, or the intermediate session management function network element.

Optionally, the transceiver unit 710 is specifically configured to receive a first message from the core network element, where the first message includes the multicast/broadcast capability information of the intermediate session management function network element.

Optionally, the transceiver unit 710 is further configured to send a second message to the core network element, where the second message is for triggering the core network element to send the multicast/broadcast capability information of the intermediate session management function network element to the first session management function network element.

Optionally, the second message includes second information, and the second information is for triggering the core network element to send the multicast/broadcast capability information of the intermediate session management function network element to the first session management function network element.

Optionally, when the core network element includes the access and mobility management function network element, the second message may include at least one of the following information: a subscribed event, a notification correlation identifier, an event notification uniform resource identifier, or a network function instance identifier. The network function instance identifier may be, for example, an identifier of the intermediate session management function network element.

Optionally, when the core network element includes the network repository function network element, the second message includes at least one of the following information: a network function type, a network function instance identifier, a network function domain name, or an identifier of the intermediate session management function network element.

Optionally, when the core network element includes the intermediate session management function network element, the second message includes information for querying the multicast/broadcast capability information of the intermediate session management function network element.

Optionally, the second message is any one of the following: a PDU session update request message, an event subscription request message, or a network function query request message.

Optionally, the first message is a response message of the second message.

Optionally, the first message is any one of the following: a PDU session update reply message, an event subscription notification message, or a network function query response message.

Optionally, the transceiver unit 710 is specifically configured to send a third message to the intermediate session management function network element, where the third message includes at least one of the following information: identification information of the first multicast broadcast service, multicast/broadcast quality of service QoS information of the first multicast broadcast service, or unicast QoS information corresponding to the multicast/broadcast QoS information of the first multicast broadcast service. The transceiver unit 710 is further configured to receive a fourth message from the intermediate session management function network element, where the fourth message includes a part or all of information in the third message. The processing unit 720 is configured to learn of the multicast/broadcast capability information of the intermediate session management function network element based on the fourth message.

In another possible implementation, the transceiver unit 710 is configured to learn of multicast/broadcast capability information of an intermediate session management function network element corresponding to a first PDU session of a terminal device, where the multicast/broadcast capability information of the intermediate session management function network element indicates whether the intermediate session management function network element supports a multicast broadcast service, the first PDU session is used by the terminal device to join a first multicast broadcast service, and the first PDU session is associated with the first multicast broadcast service. The transceiver unit 710 is further configured to: if the intermediate session management function network element does not support a multicast broadcast service, send first information to the terminal device, where the first information indicates that the intermediate session management function network element does not support a multicast broadcast service.

Optionally, the transceiver unit 710 is specifically configured to receive the multicast/broadcast capability information of the intermediate session management function network element from a core network element, where the core network element includes any one of a network repository function network element, an access and mobility management function network element, or the intermediate session management function network element.

Optionally, the transceiver unit 710 is specifically configured to receive a first message from the core network element, where the first message includes the multicast/broadcast capability information of the intermediate session management function network element.

Optionally, the transceiver unit 710 is further configured to send a second message to the core network element, where the second message is for triggering the core network element to send the multicast/broadcast capability information of the intermediate session management function network element to the first session management function network element.

Optionally, the second message includes second information, and the second information is for triggering the core network element to send the multicast/broadcast capability information of the intermediate session management function network element to the first session management function network element.

Optionally, when the core network element includes the access and mobility management function network element, the second message may include at least one of the following information: a subscribed event, a notification correlation identifier, an event notification uniform resource identifier, or a network function instance identifier. The network function instance identifier may be, for example, an identifier of the intermediate session management function network element.

Optionally, when the core network element includes the network repository function network element, the second message includes at least one of the following information: a network function type, a network function instance identifier, a network function domain name, or an identifier of the intermediate session management function network element.

Optionally, when the core network element includes the intermediate session management function network element, the second message includes information for querying the multicast/broadcast capability information of the intermediate session management function network element.

Optionally, the second message is any one of the following: a PDU session update request message, an event subscription request message, or a network function query request message.

Optionally, the first message is a response message of the second message.

Optionally, the first message is any one of the following: a PDU session update reply message, an event subscription notification message, or a network function query response message.

Optionally, the transceiver unit 710 is specifically configured to send a third message to the intermediate session management function network element, where the third message includes at least one of the following information: identification information of the first multicast broadcast service, multicast/broadcast quality of service QoS information of the first multicast broadcast service, or unicast QoS information corresponding to the multicast/broadcast QoS information of the first multicast broadcast service. The transceiver unit 710 is further configured to receive a fourth message from the intermediate session management function network element, where the fourth message includes a part or all of information in the third message. The processing unit 720 is configured to learn of the multicast/broadcast capability information of the intermediate session management function network element based on the fourth message.

Optionally, the first information is carried in a PDU session establishment reject message or a PDU session modification reject message.

Optionally, the first information includes a first indication and/or a first cause, and the first indication and/or the first cause indicate/indicates that the intermediate session management function network element does not support a multicast broadcast service.

The apparatus 700 may implement corresponding steps or procedures performed by the first session management function network element in the method embodiments according to embodiments of this application. The apparatus 700 may include units configured to perform the method performed by the first session management function network element in any one of the embodiments shown in FIG. 4 to FIG. 6A and FIG. 6B.

In another design, the apparatus 700 is configured to perform actions performed by the terminal device in the foregoing method embodiments.

The apparatus 700 may be further configured to perform actions performed by the terminal device in the foregoing method embodiments. In this case, the apparatus 700 may be the terminal device or a component of the terminal device. The transceiver unit 710 is configured to perform receiving and sending related operations on a terminal device side in the foregoing method embodiments. The processing unit 720 is configured to perform processing related operations on the terminal device side in the foregoing method embodiments.

In a possible implementation, the transceiver unit 710 is configured to receive first information from a first session management function network element, where the first information indicates that an intermediate session management function network element corresponding to a first PDU session of the terminal device does not support a multicast broadcast service, and the first PDU session is used by the terminal device to join a first multicast broadcast service. The transceiver unit 710 is further configured to send third information to an access and mobility management function network element based on the first information, where the third information is for triggering the access and mobility management function network element to select, for a PDU session associated with the first multicast broadcast service of the terminal device, at least one intermediate session management function network element that supports a multicast broadcast service, and the first PDU session belongs to the PDU session associated with the first multicast broadcast service of the terminal device.

Optionally, the third information includes a second indication and/or a second cause, and the second indication and/or the second cause indicate/indicates to select, for the PDU session associated with the first multicast broadcast service of the terminal device, at least one intermediate session management function network element that supports a multicast broadcast service.

Optionally, the first information is carried in a PDU session establishment reject message or a PDU session modification reject message.

Optionally, the first information includes a first indication and/or a first cause, and the first indication and/or the first cause indicate/indicates that the intermediate session management function network element does not support a multicast broadcast service.

Optionally, the PDU session establishment reject message or the PDU session modification reject message includes an identifier of the first PDU session.

Optionally, the third information is carried in a first NAS message, the first NAS message further includes a first join request, an identifier of the first multicast broadcast service, and the identifier of the first PDU session, and the first join request is used by the terminal device to join the first multicast broadcast service.

Optionally, the third information is carried in a second NAS message, the second NAS message further includes a second join request, an identifier of a second multicast broadcast service, and an identifier of a second PDU session, the second join request is used by the terminal device to join the first multicast broadcast service, and the second PDU session belongs to the PDU session associated with the first multicast broadcast service of the terminal device.

The apparatus 700 may implement corresponding steps or procedures performed by the terminal device in the method embodiment according to the embodiments of this application. The apparatus 700 may include units configured to perform the method performed by the terminal device in the embodiment shown in FIG. 5.

In another design, the apparatus 700 is configured to perform actions performed by the access and mobility management function network element in the foregoing method embodiments.

The apparatus 700 may be further configured to perform actions performed by the access and mobility management function network element in the foregoing method embodiments. In this case, the apparatus 700 may be the access and mobility management function network element or a component of the access and mobility management function network element. The transceiver unit 710 is configured to perform sending and receiving related operations on an access and mobility management function network element side in the foregoing method embodiments. The processing unit 720 is configured to perform processing related operations on the access and mobility management function network element side in the foregoing method embodiments.

In a possible implementation, the transceiver unit 710 is configured to receive first information from a first session management function network element, where the first information is for triggering the access and mobility management function network element to select, for a first PDU session of a terminal device, at least one intermediate session management function network element that supports a multicast broadcast service, the first PDU session is used by the terminal device to join a first multicast broadcast service, and the first PDU session is associated with the first multicast broadcast service. The processing unit 720 is configured to select, for the first PDU session of the terminal device based on the first information, at least one intermediate session management function network element that supports a multicast broadcast service.

Optionally, the transceiver unit 710 is further configured to send a first message to the first session management function network element, where the first message includes multicast/broadcast capability information of the intermediate session management function network element.

Optionally, the transceiver unit 710 is further configured to receive a second message from the first session management function network element, where the second message is for triggering the access and mobility management function network element to send the multicast/broadcast capability information of the intermediate session management function network element to the first session management function network element.

Optionally, the second message includes second information, and the second information is for triggering the access and mobility management function network element to send the multicast/broadcast capability information of the intermediate session management function network element to the first session management function network element.

Optionally, the second message includes at least one of the following information: a subscribed event, a notification correlation identifier, an event notification uniform resource identifier, or a network function instance identifier. The network function instance identifier may be, for example, an identifier of the intermediate session management function network element.

Optionally, the second message is an event subscription request message.

Optionally, the first message is a response message of the second message.

Optionally, the first message is an event subscription notification message.

Optionally, the first information includes a first indication and/or a first cause, and the first indication and/or the first cause indicate/indicates to select, for the first PDU session of the terminal device, at least one intermediate session management function network element that supports a multicast broadcast service.

Optionally, the first information is carried in a PDU session update reply message, and the PDU session update reply message further carries an identifier of the first PDU session.

In another possible implementation, the transceiver unit 710 is configured to receive third information from a terminal device, where the third information is for triggering the access and mobility management function network element to select, for a PDU session associated with a first multicast broadcast service of the terminal device, at least one intermediate session management function network element that supports a multicast broadcast service. The processing unit 720 is configured to select, for the PDU session associated with the first multicast broadcast service of the terminal device based on the third information, at least one intermediate session management function network element that supports a multicast broadcast service.

Optionally, the transceiver unit 710 is further configured to send a first message to a first session management function network element, where the first message includes multicast/broadcast capability information of an intermediate session management function network element corresponding to a first PDU session of the terminal device, and the first PDU session belongs to the PDU session associated with the first multicast broadcast service of the terminal device.

Optionally, the transceiver unit 710 is further configured to receive a second message from the first session management function network element, where the second message is for triggering the access and mobility management function network element to send the multicast/broadcast capability information of the intermediate session management function network element to the first session management function network element.

Optionally, the second message includes second information, and the second information is for triggering the access and mobility management function network element to send the multicast/broadcast capability information of the intermediate session management function network element to the first session management function network element.

Optionally, the second message includes at least one of the following information: a subscribed event, a notification correlation identifier, an event notification uniform resource identifier, or a network function instance identifier. The network function instance identifier may be, for example, an identifier of the intermediate session management function network element.

Optionally, the second message is an event subscription request message.

Optionally, the first message is a response message of the second message.

Optionally, the first message is an event subscription notification message.

Optionally, the third information includes a second indication and/or a second cause, and the second indication and/or the second cause indicate/indicates to select, for the PDU session associated with the first multicast broadcast service of the terminal device, at least one intermediate session management function network element that supports a multicast broadcast service.

Optionally, the second information is carried in a first NAS message, the first NAS message further includes a first join request, an identifier of the first multicast broadcast service, and an identifier of the first PDU session, and the first join request is used by the terminal device to join the first multicast broadcast service.

Optionally, the second information is carried in a second NAS message, the second NAS message further includes a second join request, an identifier of a second multicast broadcast service, and an identifier of a second PDU session, the second join request is used by the terminal device to join the first multicast broadcast service, and the second PDU session belongs to the PDU session associated with the first multicast broadcast service of the terminal device.

The apparatus 700 may implement steps or procedures performed by the access and mobility management function network element in the method embodiment according to embodiments of this application. The apparatus 700 may include units configured to perform the method performed by the access and mobility management function network element in FIG. 5.

It should be understood that a specific process in which the units perform the foregoing corresponding steps is described in detail in the foregoing method embodiments. For brevity, details are not described herein.

It should be understood that the apparatus 700 herein is embodied in a form of a function unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the first session management function network element in the foregoing embodiments, and may be configured to perform procedures and/or steps corresponding to the first session management function network element in the foregoing method embodiments. Alternatively, the apparatus 700 may be specifically the core network element in the foregoing embodiments, and may be configured to perform procedures and/or steps corresponding to the core network element in the foregoing method embodiments. Alternatively, the apparatus 700 may be specifically the terminal device in the foregoing embodiments, and may be configured to perform procedures and/or steps corresponding to the terminal device in the foregoing method embodiments. Alternatively, the apparatus 700 may be specifically the access and mobility management function network element in the foregoing embodiments, and may be configured to perform procedures and/or steps corresponding to the access and mobility management function network element in the foregoing method embodiments. To avoid repetition, details are not described herein again.

The apparatus 700 in each of the foregoing solutions has a function of implementing corresponding steps performed by the first session management function network element in the foregoing methods, the apparatus 700 in each of the foregoing solutions has a function of implementing corresponding steps performed by the core network element in the foregoing methods, the apparatus 700 in each of the foregoing solutions has a function of implementing corresponding steps performed by the terminal device in the foregoing methods, or the apparatus 700 in each of the foregoing solutions has a function of implementing corresponding steps performed by the access and mobility management function network element in the foregoing methods. The function may be implemented by hardware, or may be implemented by executing corresponding software by hardware. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 710 may alternatively be a transceiver circuit (for example, may include a receive circuit and a sending circuit), and the processing unit may be a processing circuit.

It should be noted that the apparatus in FIG. 7 may be the network element or the device in the foregoing embodiments, or may be a chip or a chip system, for example, a system-on-chip (system on chip, SoC). The transceiver unit may be an input/output circuit or a communication interface. The processing unit is a processor, a microprocessor, or an integrated circuit integrated on the chip. This is not limited herein.

As shown in FIG. 8, an embodiment of this application provides another multicast/broadcast communication apparatus 800. The apparatus 800 includes a processor 810. The processor 810 is coupled to a memory 820. The memory 820 is configured to store a computer program or instructions and/or data. The processor 810 is configured to execute the computer program or instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

In a solution, the apparatus 800 is configured to implement operations performed by the first session management function network element in the foregoing method embodiments. For example, the processor 810 is configured to execute the computer program or the instructions stored in the memory 820, to implement related operations of the first session management function network element in the foregoing method embodiments, for example, the method performed by the first session management function network element in any one of the embodiments shown in FIG. 4 to FIG. 6A and FIG. 6B.

In another solution, the processor 810 is configured to execute the computer program or the instructions stored in the memory 820, to implement related operations of the terminal device in the foregoing method embodiments, for example, the method performed by the terminal device in the embodiment shown in either FIG. 5 or FIG. 6A and FIG. 6B.

In another solution, the processor 810 is configured to execute the computer program or the instructions stored in the memory 820, to implement related operations of the access and mobility management function network element in the foregoing method embodiments, for example, the method performed by the access and mobility management function network element in the embodiments shown in FIG. 4 to FIG. 6A and FIG. 6B.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other suitable type of memory.

As shown in FIG. 9, an embodiment of this application provides a chip system 900. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

Specifically, for example, it is assumed that the chip system 900 is installed on a first session management function network element, and the logic circuit 910 is coupled to the input/output interface 920. The logic circuit 910 may learn of, through the input/output interface 920, multicast/broadcast capability information of an intermediate session management function network element corresponding to a first PDU session of a terminal device, where the multicast/broadcast capability information of the intermediate session management function network element indicates whether the intermediate session management function network element supports a multicast broadcast service, the first PDU session is used by the terminal device to join a first multicast broadcast service, and the first PDU session is associated with the first multicast broadcast service. If the intermediate session management function network element does not support a multicast broadcast service, the input/output interface 920 may send first information to an access and mobility management function network element, where the first information may be for triggering the access and mobility management function network element to select, for the first PDU session of the terminal device, at least one intermediate session management function network element that supports a multicast broadcast service.

For another example, it is assumed that the chip system 900 is installed on a first session management function network element, and the logic circuit 910 is coupled to the input/output interface 920. The logic circuit 910 may learn of, through the input/output interface 920, multicast/broadcast capability information of an intermediate session management function network element corresponding to a first PDU session of a terminal device, where the multicast/broadcast capability information of the intermediate session management function network element indicates whether the intermediate session management function network element supports a multicast broadcast service, the first PDU session is used by the terminal device to join a first multicast broadcast service, and the first PDU session is associated with the first multicast broadcast service. If the intermediate session management function network element does not support a multicast broadcast service, the input/output interface 920 may send first information to the terminal device, where the first information may indicate that the intermediate session management function network element does not support a multicast broadcast service.

For another example, it is assumed that the chip system 900 is installed on a terminal device, and the logic circuit 910 is coupled to the input/output interface 920. The logic circuit 910 may receive first information from a first session management function network element through the input/output interface 920, where the first information indicates that an intermediate session management function network element corresponding to a first PDU session of the terminal device does not support a multicast broadcast service, and the first PDU session is used by the terminal device to join a first multicast broadcast service. The input/output interface 920 may send third information to an access and mobility management function network element based on the first information, where the third information may be for triggering selection, for a PDU session associated with the first multicast broadcast service of the terminal device, at least one intermediate session management function network element that supports a multicast broadcast service.

For another example, it is assumed that the chip system 900 is installed in an access and mobility management function network element, and the logic circuit 910 is coupled to the input/output interface 920. The logic circuit 910 may receive third information from a terminal device through the input/output interface 920, where the third information may be for triggering the access and mobility management function network element to select, for a PDU session associated with a first multicast broadcast service of the terminal device, at least one intermediate session management function network element that supports a multicast broadcast service. The logic circuit 910 may select, for the PDU session associated with the first multicast broadcast service of the terminal device based on the third information, at least one intermediate session management function network element that supports a multicast broadcast service.

For another example, it is assumed that the chip system 900 is installed in an access and mobility management function network element, and the logic circuit 910 is coupled to the input/output interface 920. The logic circuit 910 may receive first information from a first session management function network element through the input/output interface 920, where the first information is for triggering the access and mobility management function network element to select, for a first PDU session of a terminal device, at least one intermediate session management function network element that supports a multicast broadcast service, the first PDU session is used by the terminal device to join a first multicast broadcast service, and the first PDU session is associated with the first multicast broadcast service. The logic circuit 910 may select, for the first PDU session of the terminal device based on the first information, at least one intermediate session management function network element that supports a multicast broadcast service.

In a solution, the chip system 900 is configured to implement operations performed by the first session management function network element in the foregoing method embodiments. For example, the logic circuit 910 is configured to implement processing related operations (for example, an operation other than sending and/or receiving related operations) performed by the first session management function network element in the foregoing method embodiments, for example, a processing related operation performed by the first session management function network element in any one of the embodiments shown in FIG. 4 to FIG. 6A and FIG. 6B. The input/output interface 920 is configured to implement sending and/or receiving related operations performed by the first session management function network element in the foregoing method embodiments, for example, a sending and/or receiving related operation performed by the first session management function network element in any one of the embodiments shown in FIG. 4 to FIG. 6A and FIG. 6B.

In another solution, the chip system 900 is configured to implement operations performed by the terminal device in the foregoing method embodiments. For example, the logic circuit 910 is configured to implement processing related operations performed by the terminal device in the foregoing method embodiments, for example, a processing related operation performed by the terminal device in the embodiment shown in either FIG. 5 or FIG. 6A and FIG. 6B. The input/output interface 920 is configured to implement sending and/or receiving related operations performed by the terminal device in the foregoing method embodiments, for example, a sending and/or receiving related operation performed by the terminal device in the embodiment shown in either FIG. 5 or FIG. 6A and FIG. 6B.

In another solution, the chip system 900 is configured to implement operations performed by the core network element in the foregoing method embodiments. For example, the logic circuit 910 is configured to implement processing related operations performed by the core network element in the foregoing method embodiment, for example, a processing related operation performed by the core network element in the embodiment shown in FIG. 5. The input/output interface 920 is configured to implement sending and/or receiving related operations performed by the core network element in the foregoing method embodiment, for example, a sending and/or receiving related operation performed by the core network element in the embodiment shown in FIG. 5.

In another solution, the chip system 900 is configured to implement operations performed by the access and mobility management function network element in the foregoing method embodiments. For example, the logic circuit 910 is configured to implement processing related operations performed by the access and mobility management function network element in the foregoing method embodiments, for example, a processing related operation performed by the access and mobility management function network element in any one of the embodiments shown in FIG. 4 to FIG. 6A and FIG. 6B. The input/output interface 920 is configured to implement sending and/or receiving related operations performed by the access and mobility management function network element in the foregoing method embodiments, for example, a sending and/or receiving related operation performed by the access and mobility management function network element in any one of the embodiments shown in FIG. 4 to FIG. 6A and FIG. 6B.

An embodiment of this application further provides a computer-readable storage medium. The computer-readable storage medium stores computer instructions for implementing the method performed by the first session management function network element, the terminal device, the core network element, or the access and mobility management function network element in the foregoing method embodiments.

For example, when a computer program is executed by a computer, the computer can implement the method performed by the first session management function network element, the terminal device, the core network element, or the access and mobility management function network element in the foregoing method embodiments.

An embodiment of this application further provides a computer program product, including instructions. When the instructions are executed by a computer, the method performed by the first session management function network element, the terminal device, the core network element, or the access and mobility management function network element in the foregoing method embodiments is implemented.

An embodiment of this application further provides a communication system. The communication system includes the first session management function network element, the terminal device, the core network element, or the access and mobility management function network element in the foregoing embodiments. For example, the system includes the first session management function network element, the terminal device, and the core network element in the embodiment shown in FIG. 4. For another example, the system includes the first session management function network element and the access and mobility management function network element in the embodiment shown in FIG. 5.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the foregoing described apparatus embodiment is merely an example. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of the claims.

## Claims

1. A multicast/broadcast communication method, the method comprising:
learning of (S401), by a first session management function network element, multicast/broadcast capability information of an intermediate session management function network element corresponding to a first protocol data unit, PDU, session of a terminal device, wherein the first PDU session is used by the terminal device to join a first multicast broadcast service, and the first PDU session is associated with the first multicast broadcast service; and
if the intermediate session management function network element does not support a multicast broadcast service, sending (S402), by the first session management function network element, first information to an access and mobility management function network element, wherein the first information is for triggering the access and mobility management function network element to select, for the first PDU session of the terminal device, at least one intermediate session management function network element that supports a multicast broadcast service.

2. The method according to claim 1, wherein the learning of, by a first session management function network element, multicast/broadcast capability information of an intermediate session management function network element comprises:
receiving, by the first session management function network element, the multicast/broadcast capability information of the intermediate session management function network element from a core network element, wherein the core network element comprises any one of a network repository function network element, the access and mobility management function network element, or the intermediate session management function network element.

3. The method according to claim 2, wherein the receiving, by the first session management function network element, the multicast/broadcast capability information of the intermediate session management function network element from a core network element comprises:
receiving, by the first session management function network element, a first message from the core network element, wherein the first message comprises the multicast/broadcast capability information of the intermediate session management function network element.

4. The method according to claim 3, wherein the method further comprises:
sending, by the first session management function network element, a second message to the core network element, wherein the second message is for triggering the core network element to send the multicast/broadcast capability information of the intermediate session management function network element to the first session management function network element.

5. The method according to claim 4, wherein the second message comprises second information, and the second information is for triggering the core network element to send the multicast/broadcast capability information of the intermediate session management function network element to the first session management function network element.

6. The method according to claim 4, wherein when the core network element comprises the access and mobility management function network element, the second message comprises at least one of the following information:
a subscribed event, a notification correlation identifier, an event notification uniform resource identifier, or a network function instance identifier.

7. The method according to claim 4, wherein when the core network element comprises the network repository function network element, the second message comprises at least one of the following information:
a network function type, a network function instance identifier, a network function domain name, or an identifier of the intermediate session management function network element.

8. The method according to claim 4, wherein when the core network element comprises the intermediate session management function network element, the second message comprises information for querying the multicast/broadcast capability information of the intermediate session management function network element.

9. The method according to any one of claims 1 to 8, wherein the first information comprises a first indication and/or a first cause, and the first indication and/or the first cause are/is for triggering the access and mobility management function network element to select, for the first PDU session of the terminal device, at least one intermediate session management function network element that supports a multicast broadcast service.

10. A multicast/broadcast communication method, the method comprising:
receiving (S402), by an access and mobility management function network element, first information from a first session management function network element, wherein the first information is for triggering the access and mobility management function network element to select, for a first protocol data unit, PDU, session of a terminal device, at least one intermediate session management function network element that supports a multicast broadcast service, the first PDU session is used by the terminal device to join a first multicast broadcast service, and the first PDU session is associated with the first multicast broadcast service; and
selecting (S403), by the access and mobility management function network element for the first PDU session of the terminal device based on the first information, at least one intermediate session management function network element that supports a multicast broadcast service.

11. The method according to claim 10, wherein the method further comprises:
sending, by the access and mobility management function network element, a first message to the first session management function network element, wherein the first message comprises multicast/broadcast capability information of the intermediate session management function network element.

12. The method according to claim 11, wherein the method further comprises:
receiving, by the access and mobility management function network element, a second message from the first session management function network element, wherein the second message is for triggering the access and mobility management function network element to send the multicast/broadcast capability information of the intermediate session management function network element to the first session management function network element.

13. A multicast/broadcast communication apparatus, comprising:
a processor, configured to execute a computer program stored in a memory, so that the apparatus performs the method according to any one of claims 1 to 12.

14. A computer-readable storage medium, wherein the computer-readable storage medium stores a computer program; and when the computer program is run on a computer, the computer is enabled to perform the method according to any one of claims 1 to 12.

15. A multicast/broadcast communication system, comprising a first session management function network element and an access and mobility management function network element, wherein
the first session management function network element is configured to perform the method according to any one of claims 1 to 9; and
the access and mobility management function network element is configured to perform the method according to any one of claims 10 to 12.

## Patentansprüche

1. Multicast-/Broadcast-Kommunikationsverfahren, wobei das Verfahren Folgendes umfasst:
Lernen (S401) von Multicast-/Broadcast-Fähigkeitsinformationen eines zwischengeschalteten Netzwerkelements mit Sitzungsmanagementfunktion, das einer ersten Protokolldateneinheits-(PDU-)Sitzung einer Endgerätevorrichtung entspricht, durch ein erstes Netzwerkelement mit Sitzungsmanagementfunktion, wobei die erste PDU-Sitzung von der Endgerätevorrichtung verwendet wird, um einem ersten Multicast-Broadcast-Dienst beizutreten, und die erste PDU-Sitzung mit dem ersten Multicast-Broadcast-Dienst assoziiert ist; und,
wenn das zwischengeschaltete Netzwerkelement mit Sitzungsmanagementfunktion keinen Multicast-Broadcast-Dienst unterstützt, Senden (S402) von ersten Informationen an ein Netzwerkelement mit Zugriffs- und Mobilitätsmanagementfunktion durch das erste Netzwerkelement mit Sitzungsmanagementfunktion, wobei die ersten Informationen zum Veranlassen des Netzwerkelements mit Zugriffs- und Mobilitätsmanagementfunktion sind, für die erste PDU-Sitzung der Endgerätevorrichtung mindestens ein zwischengeschaltetes Netzwerkelement mit Sitzungsmanagementfunktion auszuwählen, das einen Multicast-Broadcast-Dienst unterstützt.

2. Verfahren nach Anspruch 1, wobei das Lernen von Multicast-/Broadcast-Fähigkeitsinformationen eines zwischengeschalteten Netzwerkelements mit Sitzungsmanagementfunktion durch ein erstes Netzwerkelement mit Sitzungsmanagementfunktion Folgendes umfasst:
Empfangen der Multicast-/Broadcast-Fähigkeitsinformationen des zwischengeschalteten Netzwerkelements mit Sitzungsmanagementfunktion von einem Kernnetzwerkelement durch das erste Netzwerkelement mit Sitzungsmanagementfunktion, wobei das Kernnetzwerkelement eines von einem Netzwerkelement mit Netzwerkrepositoryfunktion, dem Netzwerkelement mit Zugriffsund Mobilitätsmanagementfunktion oder dem zwischengeschalteten Netzwerkelement mit Sitzungsmanagementfunktion umfasst.

3. Verfahren nach Anspruch 2, wobei das Empfangen der Multicast-/Broadcast-Fähigkeitsinformationen des zwischengeschalteten Netzwerkelements mit Sitzungsmanagementfunktion von einem Kernnetzwerkelement durch das erste Netzwerkelement mit Sitzungsmanagementfunktion Folgendes umfasst:
Empfangen einer ersten Nachricht von dem Kernnetzwerkelement durch das erste Netzwerkelement mit Sitzungsmanagementfunktion, wobei die erste Nachricht die Multicast-/Broadcast-Fähigkeitsinformationen des zwischengeschalteten Netzwerkelements mit Sitzungsmanagementfunktion umfasst.

4. Verfahren nach Anspruch 3, wobei das Verfahren ferner Folgendes umfasst:
Senden einer zweiten Nachricht an das Kernnetzwerkelement durch das erste Netzwerkelement mit Sitzungsmanagementfunktion, wobei die zweite Nachricht zum Veranlassen des Kernnetzwerkelements ist, die Multicast-/Broadcast-Fähigkeitsinformationen des zwischengeschalteten Netzwerkelements mit Sitzungsmanagementfunktion an das erste Netzwerkelement mit Sitzungsmanagementfunktion zu senden.

5. Verfahren nach Anspruch 4, wobei die zweite Nachricht zweite Informationen umfasst und die zweiten Informationen zum Veranlassen des Kernnetzwerkelements sind, die Multicast-/Broadcast-Fähigkeitsinformationen des zwischengeschalteten Netzwerkelements mit Sitzungsmanagementfunktion an das erste Netzwerkelement mit Sitzungsmanagementfunktion zu senden.

6. Verfahren nach Anspruch 4, wobei, wenn das Kernnetzwerkelement das Netzwerkelement mit Zugriffs- und Mobilitätsmanagementfunktion umfasst, die zweite Nachricht mindestens eine der folgenden Informationen umfasst:
ein abonniertes Ereignis, eine Benachrichtigungskorrelationskennung, eine einheitliche Ressourcenkennung für Ereignisbenachrichtigungen oder eine Netzwerkfunktionsinstanzkennung.

7. Verfahren nach Anspruch 4, wobei, wenn das Kernnetzwerkelement das Netzwerkelement mit Netzwerkrepositoryfunktion umfasst, die zweite Nachricht mindestens eine der folgenden Informationen umfasst:
einen Netzwerkfunktionstyp, eine Netzwerkfunktionsinstanzkennung, einen Netzwerkfunktionsdomänennamen oder eine Kennung des zwischengeschalteten Netzwerkelements mit Sitzungsmanagementfunktion.

8. Verfahren nach Anspruch 4, wobei, wenn das Kernnetzwerkelement das zwischengeschaltete Netzwerkelement mit Sitzungsmanagementfunktion umfasst, die zweite Nachricht Informationen zum Abfragen der Multicast-/Broadcast-Fähigkeitsinformationen des zwischengeschalteten Netzwerkelements mit Sitzungsmanagementfunktion umfasst.

9. Verfahren nach einem der Ansprüche 1 bis 8, wobei die ersten Informationen eine erste Anzeige und/oder eine erste Ursache umfassen und die erste Anzeige und/oder die erste Ursache zum Veranlassen des Netzwerkelements mit Zugriffs- und Mobilitätsmanagementfunktion sind, für die erste PDU-Sitzung der Endgerätevorrichtung mindestens ein zwischengeschaltetes Netzwerkelement mit Sitzungsmanagementfunktion auszuwählen, das einen Multicast-Broadcast-Dienst unterstützt.

10. Multicast-/Broadcast-Kommunikationsverfahren, wobei das Verfahren Folgendes umfasst:
Empfangen (S402) von ersten Informationen von einem ersten Netzwerkelement mit Sitzungsmanagementfunktion durch ein Netzwerkelement mit Zugriffs- und Mobilitätsmanagementfunktion, wobei die ersten Informationen zum Veranlassen des Netzwerkelements mit Zugriffs- und Mobilitätsmanagementfunktion sind, für eine erste Protokolldateneinheits-(PDU-)Sitzung einer Endgerätevorrichtung mindestens ein zwischengeschaltetes Netzwerkelement mit Sitzungsmanagementfunktion auszuwählen, das einen Multicast-Broadcast-Dienst unterstützt, wobei die erste PDU-Sitzung von der Endgerätevorrichtung verwendet wird, um einem ersten Multicast-Broadcast-Dienst beizutreten, und die erste PDU-Sitzung mit dem ersten Multicast-Broadcast-Dienst assoziiert ist; und
Auswählen (S403) mindestens eines zwischengeschalteten Netzwerkelements mit Sitzungsmanagementfunktion, das einen Multicast-Broadcast-Dienst unterstützt, durch das Netzwerkelement mit Zugriffs- und Mobilitätsmanagementfunktion für die erste PDU-Sitzung der Endgerätevorrichtung basierend auf den ersten Informationen.

11. Verfahren nach Anspruch 10, wobei das Verfahren ferner Folgendes umfasst:
Senden einer ersten Nachricht an das erste Netzwerkelement mit Sitzungsmanagementfunktion durch das Netzwerkelement mit Zugriffs- und Mobilitätsmanagementfunktion, wobei die erste Nachricht Multicast-/Broadcast-Fähigkeitsinformationen des zwischengeschalteten Netzwerkelements mit Sitzungsmanagementfunktion umfasst.

12. Verfahren nach Anspruch 11, wobei das Verfahren ferner Folgendes umfasst:
Empfangen einer zweiten Nachricht von dem ersten Netzwerkelement mit Sitzungsmanagementfunktion durch das Netzwerkelement mit Zugriffs- und Mobilitätsmanagementfunktion, wobei die zweite Nachricht zum Veranlassen des Netzwerkelements mit Zugriffs- und Mobilitätsmanagementfunktion ist, die Multicast-/Broadcast-Fähigkeitsinformationen des zwischengeschalteten Netzwerkelements mit Sitzungsmanagementfunktion an das erste Netzwerkelement mit Sitzungsmanagementfunktion zu senden.

13. Multicast-/Broadcast-Kommunikationsvorrichtung, umfassend:
einen Prozessor, der konfiguriert ist, um ein in einem Speicher gespeichertes Computerprogramm auszuführen, so dass die Vorrichtung das Verfahren nach einem der Ansprüche 1 bis 12 durchführt.

14. Computerlesbares Speichermedium, wobei das computerlesbare Speichermedium ein Computerprogramm speichert; und, wenn das Computerprogramm auf einem Computer ausgeführt wird, der Computer in die Lage versetzt wird, das Verfahren nach einem der Ansprüche 1 bis 12 durchzuführen.

15. Multicast-/Broadcast-Kommunikationssystem, umfassend ein erstes Netzwerkelement mit Sitzungsmanagementfunktion und ein Netzwerkelement mit Zugriffs- und Mobilitätsmanagementfunktion, wobei
das Netzwerkelement mit Sitzungsmanagementfunktion konfiguriert ist, um das Verfahren nach einem der Ansprüche 1 bis 9 durchzuführen; und
das Netzwerkelement mit Zugriffs- und Mobilitätsmanagementfunktion konfiguriert ist, um das Verfahren nach einem der Ansprüche 10 bis 12 durchzuführen.

## Revendications

1. Procédé de communication de diffusion/multidiffusion, le procédé comprenant :
l'apprentissage (S401), par un premier élément de réseau à fonction de gestion de session, d'informations de capacité de diffusion/multidiffusion d'un élément de réseau à fonction de gestion de session intermédiaire correspondant à une première session d'unité de données de protocole, PDU, d'un dispositif terminal, dans lequel la première session PDU est utilisée par le dispositif terminal pour rejoindre un premier service de diffusion multidiffusion, et la première session PDU est associée au premier service de diffusion multidiffusion ; et
si l'élément de réseau à fonction de gestion de session intermédiaire ne prend pas en charge un service de diffusion multidiffusion, l'envoi (S402), par le premier élément de réseau à fonction de gestion de session, de premières informations à un élément de réseau à fonction de gestion d'accès et de mobilité, dans lequel les premières informations sont destinées à déclencher l'élément de réseau à fonction de gestion d'accès et de mobilité pour sélectionner, pour la première session PDU du dispositif terminal, au moins un élément de réseau à fonction de gestion de session intermédiaire qui prend en charge un service de diffusion multidiffusion.

2. Procédé selon la revendication 1, dans lequel l'apprentissage, par un premier élément de réseau à fonction de gestion de session, d'informations de capacité de diffusion/multidiffusion d'un élément de réseau à fonction de gestion de session intermédiaire comprend :
la réception, par le premier élément de réseau à fonction de gestion de session, des informations de capacité de diffusion/multidiffusion de l'élément de réseau à fonction de gestion de session intermédiaire en provenance d'un élément de réseau central, dans lequel l'élément de réseau central comprend l'un quelconque d'un élément de réseau à fonction de référentiel de réseau, de l'élément de réseau à fonction de gestion d'accès et de mobilité ou de l'élément de réseau à fonction de gestion de session intermédiaire.

3. Procédé selon la revendication 2, dans lequel la réception, par le premier élément de réseau à fonction de gestion de session, des informations de capacité de diffusion/multidiffusion de l'élément de réseau à fonction de gestion de session intermédiaire en provenance d'un élément de réseau central comprend :
la réception, par le premier élément de réseau à fonction de gestion de session, d'un premier message en provenance de l'élément de réseau central, dans lequel le premier message comprend les informations de capacité de diffusion/multidiffusion de l'élément de réseau à fonction de gestion de session intermédiaire.

4. Procédé selon la revendication 3, dans lequel le procédé comprend également :
l'envoi, par le premier élément de réseau à fonction de gestion de session, d'un second message à l'élément de réseau central, dans lequel le second message est destiné à déclencher l'élément de réseau central pour envoyer les informations de capacité de diffusion/multidiffusion de l'élément de réseau à fonction de gestion de session intermédiaire au premier élément de réseau à fonction de gestion de session.

5. Procédé selon la revendication 4, dans lequel le second message comprend de secondes informations, et les secondes informations sont destinées à déclencher l'élément de réseau central pour envoyer les informations de capacité de diffusion/multidiffusion de l'élément de réseau à fonction de gestion de session intermédiaire au premier élément de réseau à fonction de gestion de session.

6. Procédé selon la revendication 4, dans lequel, lorsque l'élément de réseau central comprend l'élément de réseau à fonction de gestion d'accès et de mobilité, le second message comprend au moins l'une des informations suivantes :
un événement souscrit, un identifiant de corrélation de notification, un identifiant de ressource uniforme de notification d'événement ou un identifiant d'instance de fonction réseau.

7. Procédé selon la revendication 4, dans lequel, lorsque l'élément de réseau central comprend l'élément de réseau à fonction de référentiel de réseau, le second message comprend au moins l'une des informations suivantes :
un type de fonction réseau, un identifiant d'instance de fonction réseau, un nom de domaine de fonction réseau ou un identifiant de l'élément de réseau à fonction de gestion de session intermédiaire.

8. Procédé selon la revendication 4, dans lequel, lorsque l'élément de réseau central comprend l'élément de réseau à fonction de gestion de session intermédiaire, le second message comprend des informations destinées à interroger les informations de capacité de diffusion/multidiffusion de l'élément de réseau à fonction de gestion de session intermédiaire.

9. Procédé selon l'une quelconque des revendications 1 à 8, dans lequel les premières informations comprennent une première indication et/ou une première cause, et la première indication et/ou la première cause sont destinées à déclencher l'élément de réseau à fonction de gestion d'accès et de mobilité pour sélectionner, pour la première session PDU du dispositif terminal, au moins un élément de réseau à fonction de gestion de session intermédiaire qui prend en charge un service de diffusion multidiffusion.

10. Procédé de communication diffusion/multidiffusion, le procédé comprenant :
la réception (S402), par un élément de réseau à fonction de gestion d'accès et de mobilité, de premières informations en provenance d'un premier élément de réseau à fonction de gestion de session, dans lequel les premières informations sont destinées à déclencher l'élément de réseau à fonction de gestion d'accès et de mobilité pour sélectionner, pour une première session d'unité de données de protocole, PDU, d'un dispositif terminal, au moins un élément de réseau à fonction de gestion de session intermédiaire qui prend en charge un service de diffusion multidiffusion, la première session PDU est utilisée par le dispositif terminal pour rejoindre un premier service de diffusion multidiffusion, et la première session PDU est associée au premier service de diffusion multidiffusion ; et
la sélection (S403), par l'élément de réseau à fonction de gestion d'accès et de mobilité pour la première session PDU du dispositif terminal sur la base des premières informations, d'au moins un élément de réseau à fonction de gestion de session intermédiaire qui prend en charge un service de diffusion multidiffusion.

11. Procédé selon la revendication 10, dans lequel le procédé comprend également :
l'envoi, par l'élément de réseau à fonction de gestion d'accès et de mobilité, d'un premier message au premier élément de réseau à fonction de gestion de session, dans lequel le premier message comprend les informations de capacité de diffusion/multidiffusion de l'élément de réseau à fonction de gestion de session intermédiaire.

12. Procédé selon la revendication 11, dans lequel le procédé comprend également :
la réception, par l'élément de réseau à fonction de gestion d'accès et de mobilité, d'un second message en provenance du premier élément de réseau à fonction de gestion de session, dans lequel le second message est destiné à déclencher l'élément de réseau à fonction de gestion d'accès et de mobilité pour envoyer les informations de capacité de diffusion/multidiffusion de l'élément de réseau à fonction de gestion de session intermédiaire au premier élément de réseau à fonction de gestion de session.

13. Appareil de communication de diffusion/multidiffusion, comprenant :
un processeur, configuré pour exécuter un programme informatique stocké dans une mémoire, de sorte que l'appareil réalise le procédé selon l'une quelconque des revendications 1 à 12.

14. Support de stockage lisible par ordinateur, dans lequel le support de stockage lisible par ordinateur stocke un programme informatique ; et lorsque le programme informatique fonctionne sur un ordinateur, l'ordinateur est activé pour réaliser le procédé selon l'une quelconque des revendications 1 à 12.

15. Système de communication de diffusion/multidiffusion, comprenant un premier élément de réseau à fonction de gestion de session et un élément de réseau à fonction de gestion d'accès et de mobilité, dans lequel
le premier élément de réseau à fonction de gestion de session est configuré pour réaliser le procédé selon l'une quelconque des revendications 1 à 9 ; et
l'élément de réseau à fonction de gestion d'accès et de mobilité est configuré pour réaliser le procédé selon l'une quelconque des revendications 10 à 12.
